# EUROPEAN PATENT SPECIFICATION

(11) **EP 3 415 015 B1**
(45) Date of publication and mention of the grant of the patent: **13.05.2020**
(21) Application number: 18180506.0
(22) Date of filing: 05.07.2016
(51) Int. Cl.: A23L 19/12, A23L 19/18

(54) **METHOD FOR THE PREPARATION OF PICKLED POTATO STRINGS**
VERFAHREN ZUR HERSTELLUNG VON EINGELEGTEN KARTOFFELSTREIFEN
PROCÉDÉ DE PRÉPARATION DE CHAÎNES DE POMMES DE TERRE MARINÉES

(30) Priority: 10.07.2015 NL 2015152; 10.07.2015 NL 2015154
(43) Date of publication of application: 19.12.2018
(62) Divisional of application: 16745534.4
(73) Proprietor: HZPC Holland B.V., 8501 XG Joure (NL)
(72) Inventor: van Doorn, Johannes Elisabert, 8501 XG Joure (NL)
(74) Representative: Wittop Koning, Tom Hugo

(56) References cited:
- EP-A1- 0 105 482
- WO-A1-2015/108417
- JP-A- S5 564 753
- US-A- 4 228 196
- Anonymous: "Tu Dou Si Chinese Style Potatoes) Recipe - Food.com", , 18 April 2015 (2015-04-18), XP055255825, Retrieved from the Internet: URL:https://web.archive.org/web/2015041816 2917/http://www.food.com/recipe/tu-dou-si- chinese-style-potatoes-508669 [retrieved on 2016-03-07]

## Description

The invention relates to a method for the preparation of pickled potato strings, also known as tudousi, used in the oriental kitchen.

At present, tudousi is prepared for direct consumption by stir-frying freshly prepared, often hand-cut potato strings in portions that meet the daily requirements. These prepared strings have a small cross sectional area of 25 mm² or less and in general do not have a shelf life. Tudousi can only be kept in the refrigerator for about a day because of quick discoloration (by loss of native colour and/or after-cooking darkening) and development of off-flavours. Longer storage also often results in strings with soft and mealy texture that become a soft, granular and decomposing product upon stir-frying, instead of being intact strings with a bite and crispiness. The reason for the loss of texture and structure of the prepared potato strings is believed to be related to ongoing oxidation based deterioration processes in texture and structure upon preparation and associated to the intensity of the cooking process, the relatively small cross-sectional area of the potato strings, a large surface to volume ratio in the product, and a relatively high water loss. For this reason, only prepared potato strings having a relatively large cross sectional area of 40 mm² or more, also known as French fries, can be kept for more than a day in the refrigerator without losing texture significantly. Potato strings appear to have no shelf life whatsoever because of rapid enzymatic deterioration and oxidation processes in the product.

In the art another conservation method is known, wherein food is incubated in an acid liquid, also known as "pickling". Thus treated foods are known as "pickled" food and do not need refrigeration or to a lesser extent as compared to similar non-pickled food. Such acid conditions can also be generated by incubation of the food in a brine solution, allowing anaerobic fermentation to take place, i.e. by *Leuconostoc mesenteroides* and/or *Lactobacillus plantarum* resulting in an acid pickling liquid. However, pickled potato products are only known in limited occasions. Pickling of potatoes namely has several drawbacks. Potatoes are, relative to other vegetables used for pickling, dense in dry matter and structure and the pickling liquid cannot reach the kernels of the tubers during the pickling process. For that reason, pickling is only applied to tubers with a small diameter, cut potato cubes and potato slices. In said process of pickling, tubers are cooked, in order to disintegrate the cell walls, thus allowing the diffusion of the pickling solution into the potatoes, cubes or slices. However, cooked potatoes tend to go mush during incubation in a pickling solution, as the integrity has largely been lost as a result of said cooking.

In the art, there is no method available for the preparation of pickled potato strings having a small cross sectional area of 25 mm² or less that are still crunchy, i.e. without significantly becoming mush in particular after storage.

From a recipe from food.com (http://www.food.com/recipe/tu-dou-si-chinese-style-potatoes-508669) the preparation of tudousi with a buttery taste is known. To this end, potato strings are soaked in vinegar for 20 minutes and stir fried in oil. Said tudousi is intended for direct consumption and will lose crunchiness upon storage.

This invention describes the production process of pickled potato strings, while surprisingly maintaining its crunchiness upon storage, comprising the heating of freshly cut potato strings having a small cross sectional area of 25 mm² or less and flash cooling, i.e. blast chilling the heated strings, followed by incubation in a liquid pickling medium. These potato strings have an extended shelf life as known for other pickled food products (i.e. up to over several years at ambient temperature) keeping its original texture and can be stir fried after being stored resulting in a stir fried potato product (tudousi), having texture and bite comparable with and not discernible from a stir fried potato product from freshly cut potato strings. Said pickled potato strings are particularly suitable for dishes with strong flavours.

To this end, the invention relates to a method for the preparation of pickled potato strings, comprising the steps of:
a) Providing potatoes, having a dry matter content, expressed as specific gravity, of between 1.040 and 1.075 g/ml,
b) Cutting the potatoes of step a) in strings having a cross-sectional area of 25 mm² or less,
c) Heating the potato strings of step b) to a temperature of 140°C or less,
d) Blast chilling the heated potato strings of step c) to 10°C or less,
e) Incubating the blast chilled potato strings of step d) in a liquid pickling medium having a pH between 3 and 4.5 at an elevated temperature of at least 65°C.

The potatoes are preferably peeled before or during the cutting step b). Peeling of the potatoes can e.g. be performed and automated with any knife or abrasive based peeler at room temperature, but preferably not by heat operated peelers, to avoid heat pre-treatment on the tubers during the production process prior to the cutting of potato strings. It is also possible however to provide the potatoes unpeeled, but preferably at least washed.

Cutting of the potato strings can be performed by any suitable device and can be automated. Although the cross sectional area of the potato strings can have any form, such as round, rectangular or irregular, a square form is preferred as this form minimizes losses in cutting of the potatoes. A cross-sectional area of 25 mm² or less clearly discriminates the strings from any known potato product such as French fries.

Preferably, the cut potato strings are washed, to remove excess of starch.

The cut potato strings are heated as pre-treatment. Preferably after washing. Without such, preferably immediate, heating step, i.e. in case cut potato strings are kept refrigerated without heating pre-treatment, stir frying such refrigerated strings does result in an inferior product with poor texture and appearance. The strings will deteriorate fast in terms of colour, texture and flavour due to triggered oxidation processes upon cutting and deterioration of the cell walls.

Heating can take place e.g. by blanching the potato strings in boiling water, or by steaming at a higher temperature, or by any other suitable heating method known in the art. The term 'blanching' is intended to mean the heating of the potato strings with hot water or steam to obtain a product with optimal colour, taste, texture and appearance upon packaging and storage during their shelf life period. To this end it is important that the potato strings, having the right dimensions as defined herein, are brought in a sufficient volume of hot water or steam so that optimal heat exchange between the potato strings and the hot water can take place. The higher the heating temperature, the shorter the heating is usually to be performed. For example, if blanching in boiling water is chosen as heating method, the heating time may e.g. vary between 30 seconds and 4 minutes, which can be determined by the skilled person. When the strings are heated by steam of e.g. 120°C, the heating time will be less, e.g. 15 seconds to one minute. The minimum temperature for effective blanching is preferably 60°C, more preferably 70°C, even more preferably 80°C and typically the minimum temperature is in the range of 80-90°C for a product with good texture, shelf life and microbiological specifications. It has however been found that the dry matter content of the potato strings should preferably not be higher than 20 w/w%, preferably be between 16-19 w/w% during the preparation method. It was found that during the method of the invention, the dry matter content in the potato strings does not significantly change upon potato string production as compared with that of the potatoes provided, meaning that the dry matter content may vary during the method by ca. 0.5 w/w%. It is believed that such maintenance of the dry matter content, is important for the pickled potato strings and final consumption quality upon preparation.

Heating is preferably be performed by contacting the potato strings with water or steam of the envisaged temperature.

Importantly, the potato strings are blast chilled after heating in particular to prevent overcooking of the product. The terms 'blast chilling' and 'flash cooling' have identical meanings and are therefore interchangeably used herein, and are intended to mean that the potato strings are cooled fast to ambient temperature (i.e. to 20 - 25°C) or less, i.e. within 25 minutes, preferably within 15 minutes, even more preferably in 10 minutes or less, still even more preferably in 8 minutes or less, still even more preferably in 6 minutes or less and most preferably in 5 minutes or less. Although the above definition prevails, a more general definition of blast chilling is e.g. given in the Brochure NJB0497 Blast Chill Freeze and Thaw Blue Paper Nov 2009, retrievable from the website http://www.fosterrefrigerator.co.uk The potato strings are contacted with a cooling medium, which can be any suitable cooling medium, preferably a fluid, such as a cooling gas or liquid, e.g. air or water of ambient temperature or below. To optimize cooling, the heat exchange surface between the potato strings and the cooling medium is preferably as large as possible. Preferably, the surface of the potato strings is fully contacted with the cooling medium, e.g. by submersion in a rather large volume of cooling medium in order to minimize contacting of the potato strings with one another during cooling, or by exposing the heated potato strings to a stream of forced air. When a faster flash cooling is preferred, the temperature of the cooling medium can accordingly be chosen lower, but preferably be kept above 0 °C.

In a subsequent step, the "pickling step", the blast chilled potato strings are incubated in a liquid pickling medium having a pH of between 3 and 4.5 at a temperature of least 65°C. Pickling is a known process in the art to confer shelf life to food products. Pickling also confers an acid taste and is also known to change the texture of the food product. It was however surprisingly found that pickled potato strings prepared according to the present invention maintained the texture as from before the pickling step, and result, upon stir-frying, in tudousi having similar texture and bite as compared with unpickled freshly prepared potato strings.

The medium can comprise oil, or is an oil-in-water or water-in-oil emulsion, or an aqueous medium, or an oil free aqueous medium. Oil comprising pickling liquids are e.g. vinaigrette, a mixture of edible oil and vinegar, usually in a 3:1 volume ratio.

The skilled person is very well capable of choosing the proper acid and the amount thereof to arrive at the envisaged pH. It is also possible to mix two or more acids.

The incubation length and temperature in step e) are also known in the art and can conveniently be assessed by the skilled person. The pickling step is preferably performed at pasteurising conditions, known to the skilled person. Incubating at a relatively low elevated temperature (e.g. in the range of 65-80°C) a longer incubation time may be needed as compared to incubation at a higher temperature (e.g. in the range of 81-95°C). E.g. at an incubation temperature of 90°C, the incubation time is preferably 35 - 45 minutes.

The pickling medium can comprise supporting ingredients such as sugars, ascorbic acid, salts, herbs, spices etc. to confer an envisaged taste to the pickled product, e.g. for sour, sweet and sour and sour and spicy.

Herein, the term stir-frying is intended to mean frying at elevated temperature, preferably in oil, wherein, on weight basis, the amount of oil is lower than the amount of the product, *in casu* the potato strings, to be fried. During frying, the product is stirred, e.g. manually using a wooden spoon or the like. The oil has a temperature of preferably 160 - 260°C, preferably 220 - 240°C. The amount of oil, on weight basis, is preferably 1 - 20 % of that of the potato strings, most preferably 2 - 5 %.

The potato strings preferably have a uniform cross-sectional area, preferably over the entire length of the strings. In order to produce potato strings for use in the method of the invention, potatoes are usually cut, in the natural length direction of the tubers, by passing these through a sharpened grid, resulting in a uniform length of the strings.

In a preferred embodiment, the potato strings in step b) are cut to a cross-sectional area of 20 mm² or less, preferably 16 mm² or less, more preferably of 10 mm² or less, most preferably of 7 mm² or less. The said cross-sectional area is preferably at least 3 mm², more preferably at least 4 mm² and most preferably at least 5 mm². When the cross-sectional area becomes too small, the strings have a too large surface to volume ratio and will tend to burn or become overcooked when stir-fried. The larger the cross-sectional area, the more difficult it becomes to produce a stir fried product that is well done.

Preferably, the potato strings are cut, preferably in the natural length direction of the tubers, in step b) to have a rectangular cross-sectional area, preferably a square. As indicated above, cutting into such strings results in less material losses than when cut to cylindrical strings, i.e. a circular cross sectional area. A square form is preferred for practical and economic reasons.

Preferably, at least 80%, preferably at least 90% and most preferably 95% or more of the potato strings in step b) have a length of 30 - 150 mm, preferably 40 - 130 mm. Potato strings below 30 mm may result in an incoherent product when stir-fried, whereas strings above 150 mm may result in an over-tangled product during stir-frying, which is difficult to divide into practical portions.

The skilled person will be capable to select the proper heating parameters for potato string heat treatment such as temperature, heating time and the way of heat transfer, such as by incubation of the potato strings in hot water or by treatment with steam, all as function of scale of production and processing equipment available. Preferably, potato strings should meet particular texture requirements after the heating process, before being blast-chilled and pickled. To this end, in step c) the heating is chosen such, that a texture measurement on the heated potato strings after step c) according to the following protocol:
i. loading 160g of heated potato strings having a cross sectional area of 2.5 x 2.5 mm, of which at least 90% has a length of 30 - 150 mm, directly after the said step c) in a chamber having a top and a bottom wall, a height of 40 mm, a length of 100 mm and a width of 70 mm, which top wall has 3 slits, each having a length of 65 mm and a width of 5 mm, the slits having a distance of 2 cm to one another and oriented in parallel to one another, and perpendicular to the axis of the chamber,
ii. closing the chamber,
iii. moving sequentially through each slit in vertical direction towards the bottom wall of the chamber with a speed of 1.0 mm/s over a distance of 24 mm, a probe cutting blade having a lower cutting portion having length of 60 mm and a height of 5.7 mm between a lower side and an upper side thereof, at said lower side a lower sharp cutting edge being arranged having a length of 53 mm, flanked by rounded edges, the upper side of the cutting portion being adjacent to a lower side of a blade portion, the length thereof rejuvenating over a height of 34 mm to an upper side having a length of 46 mm and a thickness at the upper side of 2 mm, the thickness of the blade portion rejuvenating from the upper side thereof with an angle of 1 ° between the front and back side thereof towards the cutting portion, said cutting portion rejuvenating from the upper side thereof with an angle of 6° between the front and back side thereof to the lower sharp cutting edge with a calibrated sharpness of 2.08 - 2.44 N,
iv. during said moving, measuring the resistance force exerted on the blade as soon as the said force exceeds a threshold of 0.49 N, steps i. - iv. being performed at 60°C,
v. repeating steps i. - iv., resulting in 6 measurements,
vi. calculating the parameters Fmax (maximum average resistance force) and SA (average surface area, defined as the surface under a graph, reflecting the resistance force curve in time during each measurement of steps iv.) from the 6 measurements wherein outlier values outside the 95% confidence interval by variance analysis (ANOVA) are excluded from the calculation,
results in an Fmax of at least 12 N above the threshold, and SA of at least 130 Ns.

When the potato strings fulfil the above texture requirements, it has been found that optimal pickled potato strings can be obtained, resulting in an a stir-fried potato product having optimal texture qualities such as bite and crispiness after being stir-fried, while being capable of being stored at ambient temperature. In a first step of the texture measurement, the heated potato strings are allowed to cool down to 60°C, and 160 gram are weighted and put evenly in the container which is subsequently closed. The texture measurement, i.e. steps i. - iv. are performed at 60°C, preferably in a thermostatised room, such as a Peltier cabinet wherein the temperature is regulated to be 60°C. The closed container is preferably at 60°C. Once the potato strings are loaded in the chamber, the chamber is closed and a probe blade of the above described dimensions and sharpness is moved with a constant speed of 1.0 mm/s through the slits and through the potato strings for 2.4 cm, confined in the chamber. The sharpness of the blade is defined by the average of 6 values, obtained by double measurements at three locations on the sharp cutting edge of the blade being uniformly sharpened, i.e. at the middle of the cutting edge between the rounded edges (at 2.65 mm from both edges) and at 1.8 mm from the said middle towards both rounded edges. The measurements are to be performed by using a CATRA Razor Edge Sharpness tester (REST) (CATRA, Henry Street , Sheffield, S3 7EQ, UK) and by applying the suppliers' calibration protocol, the detailed principles of the said standardized test protocol being in the following link (herein incorporated by reference):
http://www.catra.org)/pages/products/kniveslevel1/st.htm
resulting in a sharpness in the above range of 2.08 - 2.44 N.

As soon as the resistance force of the probe blade reaches a threshold of 0.49N, the said force is registered while the blade continues to move through the confined potato strings. The maximum force is an indication of the crispiness. If the maximum force is too low, it has been found that the resulting stir-fried product after storage gives a too weak, mealy and spongy product. When a force-time curve is produced in a graph showing the resistance force, exerted by the confined potato strings to the probe blade in time, the Fmax reflects the bite or firmness of the potato strings while the SA (surface under the curve) is associated to the amount of labour needed to disintegrate, chew and clear the product upon consumption. If the SA value is too low, the strings are too soft and overdone relative to the target texture profile, which has been found to result in a stir-fried product of bad texture. A total of 6 texture measurements are obtained per potato strings sample, comprised of two triplicate observations on a replicate product sample. Outlier values outside the 95% confidence interval by variance analysis (ANOVA using GenStat 14^{th} Edition software) are excluded from the calculation. Preferably, at most 2 of the 6 calculated values are outside the 95% confidence interval. If more than 2 of the 6 calculated values are outside the said confidence interval, the desired texture requirements are not met. The Fmax is at least 12, preferably 13 N, most preferably 14 N above the threshold. The SA is at least 130 Ns, preferably at least 140 Ns.

If the above texture requirements are met, proper heating conditions are therewith identified to perform the method of the present invention to arrive at ready-to-use pickled potato strings having extended shelf live at ambient temperature for the preparation of tudousi by stir-frying the pickled potato strings. The skilled person is free to choose the heating procedure he prefers, as long as, in this preferred embodiment, the texture values are met.

In another preferred embodiment, the time T_{FP} to reach a first peak on the time-force curve during a texture measurement is 14 - 21 s, preferably 15 - 20 s. The time to reach the first peak is an indication about the packing quality of the product in the container. If the first peak is reached too early, i.e. before 14 s, it is an indication that the product is packed too dense or uneven resulting in first peak values before 14s. If the first peak is realized late in the cycle, i.e. after 21 seconds it is an indication that the container is filled too loose with strings with late first peak timing as result. If time T_{FP} is outside the above range of 14 - 21 s, or preferably outside 15 - 20 s, the texture measurement should be repeated by reloading the chamber more evenly, as otherwise, the average resistance force as calculated in step vi. will be unreliable.

In another preferred embodiment, the time T_{FM} to reach Fmax during a texture measurement is 15 - 24 s. The process of movement of the probe blade through the confined potato strings takes 24 seconds, so the Fmax should preferably be realised relative late during the measurement as force builds gradually up to its maximum during the texture measurement process. The Fmax of a strings sample and the time T_{FM} to reach this value are dependent on two principles, (1) the texture of the product in terms of soft to firm and (2) the quality of the packing of the product in the container in terms of (un)even density. With respect to texture, typical Fmax values between 5 - 25N can be observed for ready-to-use potato strings, values that are realized between 15 and 24 seconds in the test protocol if the strings are properly evenly packed. An initial hard bite is experienced at Fmax values above 20N, associated with a relative raw or under processed product. Such a bite is less desired for the potato strings of the invention. The same is true when the Fmax is below 12N, indicating an initial soft overcooked texture.

Preferably, the potato strings in step c) are heated to 120 °C or less, preferably to about 100°C (the term 'about' would allow a temperature variation of 5°C around the indicated value, preferably of 3°C, more preferably 1 °C and most preferably 0°C). It has been found that at higher temperatures, the heating time is usually short, i.e. below 1 minute, which makes the process to be performed on industrial scale more complicated. The risk of over cooking is relatively high, resulting in a too soft texture. The potato strings in step c) are preferably heated to at least 60°C, more preferably to at least 70 °C, even more preferably to at least 80°C.

In step c) of the method of the present invention, the heating time is preferably 360s. or less, more preferably 240s. or less, even more preferably 60s. or less. Shorter times are possible, but from an industrial feasibility point of view, less desired, as explained above. The heating time is preferably at least 30s., more preferably at least 50s. Preferably, the potato strings in step c) are blanched in boiling water, in particular for 1 minute, or by steam. Good results are obtained when 1 kg of potato strings are blanched during 1 minute in 26 litre of boiling water. However, it should be noted that the texture values Fmax and SA preferably comply with the above values.

It is to be understood that the step of blast chilling, or flash cooling, is preferably performed for 10 minutes or less, more preferably for 8 minutes or less, even more preferably for 6 minutes or less, and most preferably for 5 minutes or less. In a preferred embodiment, blast chilling takes place between ambient temperature and 1°C lower temperatures are possible, but it is preferred that the potato string do not freeze while being blast chilled. In a preferred embodiment, in step d) the heated potato strings are blast chilled to 15°C or less, preferably to 10°C or less, even more preferably to 7°C or less, and most preferably to 3-5°C, i.e. at a temperature of common household and industrial refrigerators. Blast chilling can be performed in any way known to the skilled person, and suitable flash cooling or blast chilling instruments are known, for example those of Foster, UK. Flash cooling is necessary to stop the cooking process in the strings in order to avoid the strings to become too soft, resulting in impaired shelf life and texture of the stir-fried product.

For optimal cooling, the step of blast chilling preferably comprises contacting the potato strings with a forced stream of cooling fluid, such as cooling gas or air, or a liquid, preferably an aqueous liquid, said cooling fluid preferably having a temperature of between 25 °C and 1°C. In an attractive embodiment, pickling liquid can be chosen as cooling fluid for blast chilling. In that case, the pickling liquid will have a temperature as indicated above, i.e. between 25 °C and 1°C, or any of the described preferred temperatures for blast chilling, which medium is then heated to the envisaged temperature in the pickling step e).

The potato strings preferably have a dry matter content of between 16 and 19 w/w% during the steps of cutting, heating and blast chilling. It has been found that maintaining the dry matter content within this range, results in pickled potato strings with optimal texture, structure and integrity properties, resulting in crunchy tudousi when stir-fried. This is preferably achieved by avoiding oil contact with the potato strings until pickling, preferably until stir-frying, or at least to minimize contact with oil. Preferably, potatoes having a dry matter content of between 16 and 19 w/w% are provided for the preparation of potato strings according to the invention.

In step e), the pickling liquid is preferably an aqueous medium. As outlined above, the pickling liquid can also contain oil, but in view of optimal texture of the potato strings after being kept in the pickling liquid, said pickling liquid is preferably void of oil.

In another preferred embodiment, the pH of the pickling liquid is between 3.5 and 4.3, resulting in optimal taste experience after stir frying.

In a particular embodiment, the pickling liquid comprises an edible acid, in particular chosen from the group, consisting of acetic acid, citric acid, malic acid and lactic acid. Acetic acid is a mild and edible acid particularly suitably for pickling. The amount of acid is chosen such that the envisage pH is obtained.

Vinegar is a common food ingredient and often used for pickling. Therefore, the pickling liquid preferably comprises vinegar, in particular 0.5 - 5 v/v%, preferably 1- 2 v/v% vinegar. Such amounts of vinegar result in the envisaged pH value.

Advantageously, the weight ratio of potato strings : pickling solution is between 4:6 to 6:4, although other ranges are possible as well. However, a higher relative amount of pickling liquid results in unnecessary spoilage of pickling medium, and, if the potato strings are packaged and kept in the pickling solution, an undesired large volume needs to be packaged. On the other hand, if the relative amount of potato strings is higher, suboptimal contact between the pickling liquid and the potato strings may require longer incubation times to ensure the envisaged shelf life.

The incubation temperature in the pickling step is preferably below 100°C, as above 100°C, the chance of loss of texture and bite of the potato strings may become significant. Therefore, the elevated temperature in pickling step e) is preferably between 80 and 95°C, more preferably at about 90°C. The incubation in the pickling step e) at elevated temperature is preferably for at least 20 minutes, more preferably at least 30 minutes, most preferably at least 40 minutes. The incubation at elevated temperature is preferably for at most 120 minutes, more preferably at most 90 minutes, most preferably at most 60 minutes. An incubation time of 40 - 50 minutes is preferred. The time and duration of the pickling step can be optimized by the skilled person to ensure shelf life and efficient elimination of microbes in the product, while maintaining the crunchiness when stir-fried.

In an attractive embodiment, the pickling step e) comprises filling the blast chilled potato strings of step d) and the pickling liquid in a container and closing the container before incubating the potato strings at elevated temperature. This way, the potato strings are packaged at the beginning of the pickling step, before or at the beginning of incubating at the elevated temperature, and ready for transport, storage or sale after pickling, without any further processing steps being needed. Thus, the potato strings are being kept in the pickling medium, resulting in optimal storage times. In a particularly attractive embodiment, the potato strings are packed in a jar having a lid, in particular a glass jar, the lid being preferably reclosable, e.g. being a screw cap, so that the customer can see the pickled product.

As indicated above, it is also possible to use pickling liquid in the blast chill step d) as cooling liquid. To this end, step d) comprises adding the heated potato strings of step c) to the pickling liquid of step e), said pickling liquid having a temperature of 1 - 25°C, and step e) comprises heating the pickling liquid comprising the potato strings of step d) to the elevated temperature of at least 65°C and incubating at the said temperature. By this embodiment, the blast-chilling step and the pickling step are combined in a cost effective manner.

Pickled potato strings prepared according to the invention comply with standard appearance requirements of pickled products in glass jars. The strings keep their initial dimensions in terms of diameter and length upon cutting and blanching. Moreover, the string containing pickling solution remains clear without any leaching of starch granules out of the strings upon pickling. In particular, potato strings prepared from potato varieties or batches that do not fulfil the texture requirements as described above, have a greater chance of developing signs of disintegration in the jars and releasing starch granules in the pickling solution, resulting in turbid pickling liquid and an unattractive appearance of the product.

The described method preferably comprises a step f) of storing the pickled potato strings of step e) in the liquid pickling medium in a closed container, such as a glass jar with a metal screw cap. However, any suitable closable container can be used. No cooling is necessary during said storage. Therefore the storage temperature is preferably ambient temperature, i.e. 18 - 25°C, preferably 18 - 22°C. Storage is preferably for at least a month, more preferably for at least 6 months, or even longer, e.g. 1, 2, 3 or 4 years. After storage, the potato strings preferably have substantially the same texture as compared with potato strings, produced from the same batch and treated the same way, but without being pickled. To this end, the potato strings preferably have, after said storage period, at least for one of Fmax or SA as defined above, or for both Fmax and SA, the same value(s) as measured after heating step c).

The texture of the potato strings after being pickled is preferably not impaired during the storage. To this end, at least for one of texture parameters Fmax or SA as defined above, or for both Fmax and SA, the potato strings have the same value(s) after one or more of the above-indicated storage time periods as measured after heating as described above.

As indicated above, contact of potato strings with oil is to be minimized in view of texture, in particular during steps a) - e). It has been found that when contact between the potato strings and oil during the preparation process is avoided, potato strings can be obtained wherein the dry matter content does not significantly increase, and that keep the required qualities such as texture, integrity and structure, resulting in a crispy and crunchy stir-fried product. The claimed method is therefore preferably oil free during steps a) - e), meaning that the potato strings are not contacted with oil as from the moment the potatoes are cut into strings until after blast chilling, but also preferably during the pickling step, preferably until the strings are subjected to a stir-frying step.

The invention also relates to a method for the determination of suitability of a batch of potatoes of a variety or different varieties to be used in the above-described method for the preparation of pickled potato strings or stir-fried pickled potato strings having a texture and bite as described above. In this method, the texture of potato strings is tested after a defined heating step of 3 minutes blanching in boiling water, wherein preferably 1 kilogram of cut potatoes, comprising the following steps:
A) providing peeled potatoes,
B) cutting the peeled potatoes in strings with a cross sectional area of 2.5 x 2.5 mm, of which at least 90% has a length of 30 - 150 mm,
C) blanching the said potato strings in boiling water during 3 minutes,
D) loading 160 g of the blanched potato strings in a container having a top and a bottom wall, a height of 40 mm, a length of 100 mm and a width of 70 mm, which top wall has 3 slits, each having a length of 65 mm and a width of 5 mm, the slits having a distance of 2 cm to one another and oriented in parallel to one another, and perpendicular to the axis of the chamber,
E) closing the chamber, moving sequentially through each slit in vertical direction towards the bottom wall of the chamber with a speed of 1.0 mm/s over a distance of 24 mm, a probe cutting blade having a lower cutting portion having length of 60 mm and a height of 5.7 mm between a lower side and an upper side thereof, at said lower side a lower sharp cutting edge being arranged having a length of 53 mm, flanked by rounded edges, the upper side of the cutting portion being adjacent to a lower side of a blade portion, the length thereof rejuvenating over a height of 34 mm to an upper side having a length of 46 mm and a thickness at the upper side of 2 mm, the thickness of the blade portion rejuvenating from the upper side thereof with an angle of 1° between the front and back side thereof towards the cutting portion, said cutting portion rejuvenating from the upper side thereof with an angle of 6° between the front and back side thereof to the lower sharp cutting edge with a calibrated sharpness of 2.08 - 2.44 N,
F) during said moving, measuring the resistance force exerted on the blade as soon as the said force exceeds a threshold of 0.49 N, steps D) - F) being performed at 60°C,
G) repeating steps D) - G), resulting in 6 measurements,
H) calculating the parameters Fmax (maximum average resistance force) and SA (average surface area, defined as the surface under a graph, reflecting the resistance force curve in time during each measurement of steps G) from the 6 measurements wherein outlier values outside the 95% confidence interval by variance analysis (ANOVA) are excluded from the calculation,
I) determine the potatoes as suitable if the Fmax is at least 12 N above the threshold, and the SA is at least 130 Ns.

The same steps (including those for the determination of the sharpness of the cutting blade) are performed as the previously described texture test to determine proper heating conditions, but now with a predetermined heating step, in order to test the suitability of potatoes as starting material for potato string production. For example, potatoes with a floury cooking behaviour are not very well suited to be used as starting material for the method of the present invention. On the other hand, some batches of potato varieties that can be very suitable to be used in the present method, can be less suitable, due to environmental conditions like certain weather conditions during growth of the potatoes, or storage conditions of the potatoes. Therefore, a suitability test is preferably performed before potato strings according to the present invention are made. Blanching step C) is performed on 1 kg of the potato strings in 26 litre of boiling water. Suitable potatoes, determined according to the above-described method, are therefore advantageously blanched for 1 minute in boiling water when pickled potato strings according to the invention are to be made.

Again, the time T_{FP} to reach the first peak on the curve is preferably 14-21s, more preferably 15-20 s, the time T_{FM} to reach Fmax is preferably 15 - 24 s, and the Fmax is preferably at least 13 N, more preferably 14 N above the threshold, and the SA is preferably at least 130 Ns.

According to the methods of the invention, the potatoes of step a) have a dry matter content, expressed as specific gravity, between 1,040 and 1,075 or 1,045 and 1,075 g/ml, more preferably between 1,050 and 1,070 and preferably have a value of 1 - 4 on the 1 - 7 waxy/floury scale (Ochsenbein et al., J. Texture Studies 41 (2010) 1-16), more preferably of 1 - 3, even more preferably of 1 - 2 and most preferably of 1, meaning that suitable potatoes are waxy. The potatoes of step a) preferably originate from a variety, chosen from the group, consisting of Amandine (CVPO19950969, EU2504), Annabelle (CVPO19990634, EU6935), Franceline (CVPO19952868, EU175), Marilyn (CVPO20042380, EU17273), and varieties derived therefrom. The numbers between brackets refer to corresponding plant breeders rights. It has been shown that by using these varieties, a very attractive pickled potato strings and an attractive stir-fried product can be produced, with very good firmness and crispiness after being stir-fried. It is to be noted that potato varieties for French fries have more floury characteristics and have a higher dry matter content, with a specific gravity of 1,078 or more. Potato varieties having a lower dry matter content have shown to result in undesirable fries having impaired texture properties. For tudousi as prepared by stir-frying the pickled potato strings as described herein, in contrast, potato varieties having lower dry matter content are preferred.

The invention also relates to pickled potato strings, obtainable by the method as described above for the preparation of instant stir-fried potato strings having a shelf life at ambient temperature before stir-frying of at least one to 6 months.

The invention further relates to a method for the preparation of stir-fried pickled potato strings, comprising the step of stir-frying the pickled potato strings, as obtained by the method described herein for the preparation of instant stir-fried potato strings.

The pickled potato strings are preferably stir-fried in oil, wherein the amount of oil, on weight basis, is preferably 1 - 20 % of that of the potato strings, most preferably 2 - 5 %.

Also described is a closed container, comprising potato strings in liquid pickling medium, obtainable by the above-described method. In such closed container, the potato strings are kept in the liquid pickling medium that functions as a preservative while allowing the potato string to remain texture, so that the said potato strings are crunchy upon being stir-fried.

The invention will now be described by way of the following non limiting examples and figures, wherein
Figures 1A-D show different views of a chamber used to perform texture measurements to check whether a batch of potatoes is suitable to be used for the preparation of dried potato bodies or pickled potato strings, or to check whether heating conditions are properly chosen.
Figures 2A-C show a probe blade, used in the said texture measurement.
Figures 3A-C show graphs of texture measurements on a batch of potato strings of the same variety wherein the force needed to move the probe blade through the heat treated potato strings produced during step c) in the chamber (Y-axis) is shown in time (X-axis) showing examples of inferior and suitable texture profiles that are typical for dried potato products of for tudousi products upon production.
Figures 4A - F show graphs of such texture measurements on different potato batches from 6 different potato varieties.

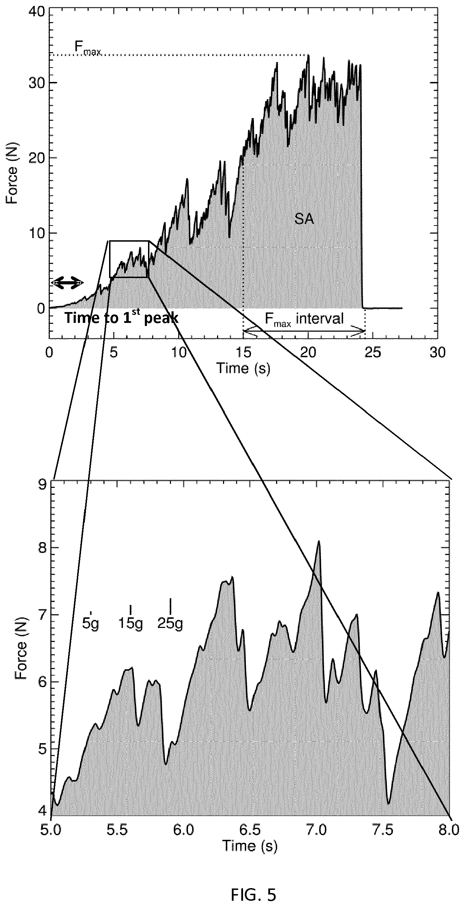

Figure 5: Texture curves from triplicate runs of freeze-dried potato strings of variety Annabelle, as obtained by the texture protocol described herein. Top panel: Texture curve of a complete run depicting the parameters Fmax, time to 1^{st} peak T_{FP} and area under de curve (SA). The squared section in the top panel is magnified for the visualization of sharp peaks in the ranges 5 to 25g in the bottom panel. Bottom panel: Magnified section of the top panel depicting sharp peak pattern on top of the texture curve. Scale bars represent peak heights of 5, 15 and 25g respectively.

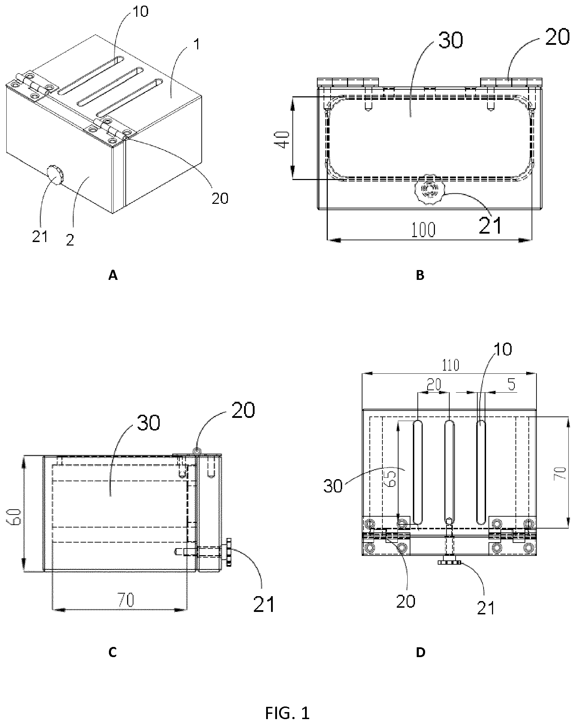

Figure 1A shows housing 1 of a test chamber having a lid 2, with hinges 20, allowing proper opening and closing of the lid 2. Screw cap 21 secures closing of the lid 2. In the housing, three slits 10, arranged in parallel, are present. Figure 1B shows a cross section, parallel to the lid through the housing with an indication of the dimensions in mm through the test chamber of figure 1A, showing screw cap 21 and hinges 20. A cavity 30 for receiving potato strings is depicted by 30. The said cavity has a height of 40 mm and a length of 100 mm. In figure 1C, a cross section perpendicular to that of Figure 1B is shown, again showing hinge 20, screw cap 21 and cavity 30. The width of cavity 30 is 70 mm. Figure 1D shows a cross section, parallel to slits 10 through the housing, showing screw cap 21 and hinges 20. The slits have a length of 65 mm and a width of 5 mm, and are spaced 20 mm from one another. In use, the lid 2 of the test chamber is opened and 160 gram of potato strings is evenly loaded in the chamber. The lid 2 is closed by turning cap 21. In order to improve the even loading of the potato strings, the chamber can be slightly shaken and knocked on a flat support surface such as a work bench or table.

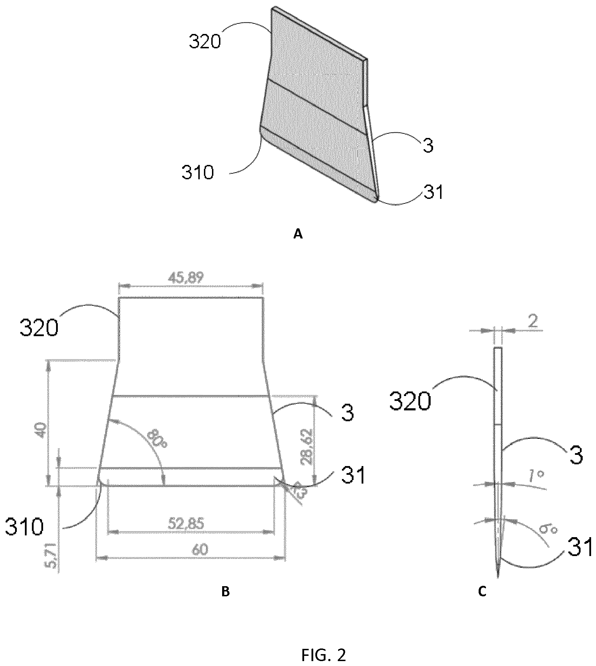

Figure 2A shows a drawing of a probe cutting blade showing the front side, defining the length and height of the probe cutting blade and the side, perpendicular thereto defining both the height and the thickness of the probe blade, the probe cutting blade having a lower cutting portion 31, of a blade portion 3 and of an upper mounting portion 320. Side views 2B (from the front) and 2C (from the side), wherein the dimensions are indicated in mm, show the same probe blade having a lower cutting portion 31 having length of 60 mm and a height of 5.7 mm between a lower side and an upper side thereof, at said lower side a lower sharp cutting edge being arranged having a length of 53 mm, flanked by rounded edges, the upper side of the cutting portion being adjacent to a lower side of a blade portion 3 rejuvenating over a height of 34 mm to an upper side having a length of 46 mm (i.e. having a rejuvenating angle with the lower sharp edge of 80°), and a thickness at the upper side of 2 mm, adjacent to an upper mounting portion having a constant length of 46mm and thickness of 2 mm, the thickness of the blade portion 3 rejuvenating from the upper side thereof with an angle of 1° between the front and back side thereof towards the cutting portion, said cutting portion rejuvenating from the upper side thereof an angle of 6° between the front and back side thereof to the lower sharp cutting edge.

The dimensions of the mounting portion are not particularly relevant, as long sufficient surface is provided for a cutting device to hold the probe cutting blade. The cutting edge of sharp cutting portion 31 has a sharpness of 2.08 - 2.44 N, determined as described above. Such a probe blade is to be used when texture measurements are to be performed according to the present invention.

During a texture measurement, the cavity 30 of the test chamber 1 loaded with a predetermined amount of heated potato strings, and a probe blade as defined above, starting with the sharp edge portion 31 is passed through the slits 10 of the chamber 1 with a predetermined speed for a predetermined time period.

It is known to a skilled person in texture analysis that data generated by texture protocols is not only a function of the product tested but also dependent on the design, dimensions and condition of the instrument, probe and sample container as functional unit for the measurements. Proper and correct use of the texture analyser, probe and sample container combination, good cleaning, regular maintenance and calibrations are basic requirements for the collection of reliable texture data. Small changes in probe and sample container dimensions and specifications, sample quantities or texture analyser settings may change the values of data obtained and let them deviate from the observations in the given examples. Deviations from the given experimental design in terms of dimensions, specifications, quantities and instrumental and software settings, however, may change absolute values of the texture parameters of interest but will not disturb the relative ranking of these texture parameters in the specified texture range of potato bodies or of tudousi products for potato varieties. A skilled person in texture analysis can therefore standardize collected data from a texture analyser, probe, sample container combination that deviates from the described experimental design in this patent to the reference texture values obtained in this patent.

### Examples 1 - 5

### Example 1: Texture measurement protocol for potato strings

Potatoes of an envisaged batch of a potato variety are cut in axial direction to strings of 2.5 x 2.5 mm, having a length of 30- 150 mm with a Hallde RG200 vegetable cutter equipped with a 2.5 x 2.5 mm Julienne knife.

1 Kg of the strings of each variety are blanched in a Frymaster (Frymaster - E4 Electric Fryers RE17TC, 17 kW) with 26 litre of boiling water during 3 minutes. The strings are taken from the boiling water, freed from adherent water on a sieve, and 160 g thereof is immediately evenly loaded in a test chamber as described for figure 1, after which the lid of the chamber is closed.

A probe blade as depicted in figure 2 is sequentially moved through each of the three slits of the test chamber in the direction to the bottom thereof, with a speed of 1 mm/s over a distance of 2.4 cm. During the movement of the probe blade through the chamber, the resistance force, exerted on the blade is recorded as soon as the said force exceeded a trigger threshold of 0.49N.

The moment when a maximum force Fmax is reached, T_{FM}, during the blade movement is recorded as well. To this end, the probe blade is mounted on a Stable Micro Systems TA-X2 Plus texture analyser with associated software (Exponent software version 4.0.9.0, XT Plus Version 0.01178) running in the compression mode at 1 mm/s.

Loading of the potato strings in the test chamber and moving the blade through the test chamber is performed at 60°C in a Temperature Controlled Peltier Cabinet (XT/PC). This results in three recordings of the resistance force in time.

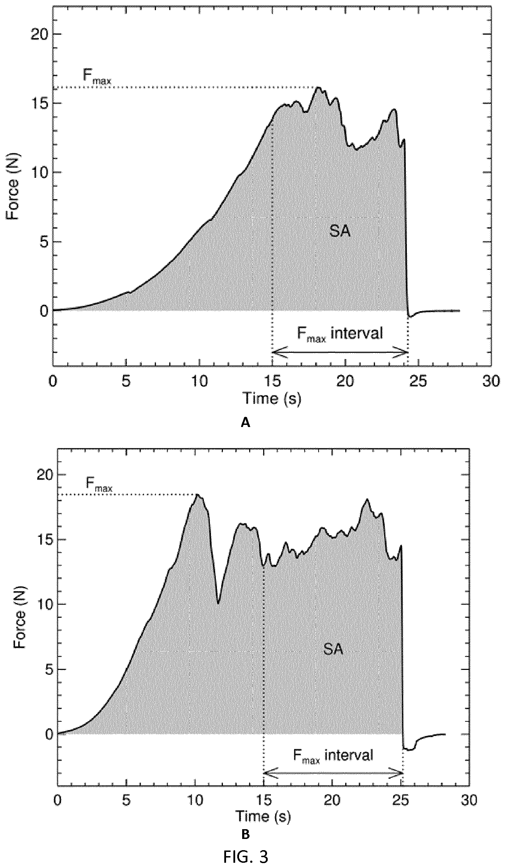

The above was repeated, resulting in a total 6 recordings per sample of potato strings. Time-force traces of strings samples obtained by the texture analysis protocol with the SMS instrumental design of texture analyser, XT/PC cabinet and probe show typical patterns as shown in figure 3A-C, in this case for the variety Franceline. More than 90% of all curves obtained with the experimental design has the shape and pattern of figure 3A. An initial gradient in force between 0 and 15 seconds leads to a series of force peaks in the time frame between approximately 15 and 25 seconds. The gradient can be explained by a steady compression of the product by the probe until the product is fully trapped between the knife and the bottom of the container at about 15 seconds runtime. Then the knife starts cutting the strings that are encountered during the remaining runtime with typical spikes as result. The height of the force and associated parameters depend on the texture of the sample and will get further attention in examples 2 and onwards.

The time-force curves are interpreted by SMS software and a defined macro (see table 1) for this purpose into 4 descriptive texture parameters Fmax (the highest peak in the curve), the time to the first peak (T_{FP}), the time to Fmax (T_{FM}) and the surface area under the curve SA as measure for labour conducted during the run.

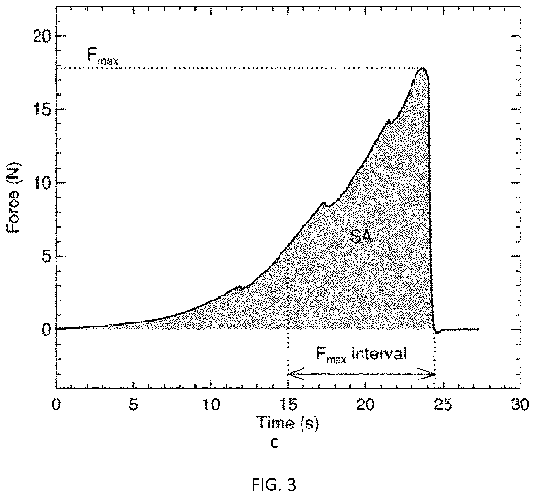

Despite the care taken during the filling of the container, uneven filling may occur within certain spaces of the container with too high or too low density of strings per unit volume as result. Above average density of strings may lead to curve shapes that differ from those with under average density. The texture analysis protocol therefore preferably comprises a quality control step to remove outlier curves from the 6 texture recordings per sample applying ANOVA analysis as QC tool for the interpretation and classification of the samples for tudousi quality criteria. Analysis of variance (ANOVA using GenStat 14^{th} Edition software) on the data of the texture parameters from 6 time-force curves per sample, as a tool for quality control of collected data, reveals that a small number of curves yields aberrant texture data that significantly deviate from the mean values of the 6 observations at p=0.05 (95% confidence interval, 95% CI). The application of a one-factor ANOVA, as classical variance test, with variety as factor and the texture parameters Fmax or SA typically identifies outliers in the 6 observations per parameter outside the 95% Cl according to the ratio between deviations of individual data values from the average (calculated as residues from the average) divided by 2×√(residual variance) from the ANOVA analysis table. Absolute ratio's =/> 2 are outside the 95% Cl, marked as outliers and removed from the data file prior to the calculation of average Fmax (the highest peak in the curve), the time to the first peak (T_{FP}), the time to Fmax (T_{FM}) and the surface area under the curve SA values per sample. Root cause analysis resulted in the observation that the outlier data for the texture parameters were mainly originating from a curve shape with a low and late gradient in combination with a late first peak in the curve almost at the end of the runtime, between 24 and 25s (figure 3C). In a number of cases a curve (figure 3B) with a steep force gradient and an early first peak earlier than 14s is observed, leading to high SA type outliers. When measurement results as shown in figures 3B and 3C are obtained, these measurements should not be included in the texture analysis. Figure 3A shows a proper measurement, wherein the first peak is within the proper interval of 14 - 21 s.

Significant differences for the texture parameters Fmax, T_{FP}, T_{FM} and SA are calculated with variance analysis (ANOVA) and expressed as LSD (Least Significant Difference) values at p=0.05 and presented below data tables if applicable. If data of more than 2, preferably more than 1 of the measurements have to be discarded according to the ANOVA analysis, the conclusion must be drawn that the packing of the potato string sample or samples was not evenly, and that sampling and measurements are to be repeated. In an exceptional case where despite even packing more than two measurements, preferably more than one of the measurements are to be discarded, the strings batch is outside specifications in that it contains a heterogeneous mix of strings that do not meet the quality criteria.

**Table 1: Software macro settings for time-force curve interpretation in terms of Fmax, T_{FP}, T_{FM}, and SA.**

| | | | | | | | | | | | |
|---|---|---|---|---|---|---|---|---|---|---|---|
| | | | | | | | | | | | |

| | **Program** | | | | | | | | | | |
|---|---|---|---|---|---|---|---|---|---|---|---|
| | | | | | | | | | | | |

| | **step** | | **setting** | **unit/mode** | **R** | **F** | **?** | **A** | **I** | **texture trait** | |
|---|---|---|---|---|---|---|---|---|---|---|---|
| | Clear Graph Results | | | | | | | | | | |
| | Redraw | | | | | | | | | | |
| | Search Forwards | | | | | | | | | | |
| | Go to Peak +ve Value | | Force | | | | | | | | |
| | Set Threshold...Force | | 25 | g | | | | | | | |
| | Mark Value Time | | | | X | | | | | T_{fp} (s) | |
| | Go to.. Time | | 0 | sec | | | | | | | |
| | Go to Abs. +ve Value | | Force | N | | | | | | | |
| | Mark Value Force | | | | X | | | | | Fmax (N) | |
| | Go to.. Time | | 0 | sec | | | | | | | |
| | Drop Anchor | | | | | | | | | | |
| | Select Anchor | | 1 | Anchor Not Activated | | X | | | X | | |
| | Go to Max. Time | | | | | | | | | | |
| | Search Backwards | | | | | | | | | | |
| | Go to.. Time | | 25 | sec | | | | | | | |
| | Drop Anchor | | | | | | | | | | |
| | Select Anchor | | 2 | Anchor Not Activated | | X | | | X | | |
| | Area | | Active vs Active | | * | | | | | SA (Ns) | |
| | Redraw | | | | | | | | | | |
| | Go to.. Time | | 0 | sec | | | | | | | |
| | Drop Anchor | | | | | | | | | | |
| | Goto Abs. +ve Value | | Force | N | | | | | | | |
| | Drop Anchor | | | | | | | | | | |
| | Time Difference | | | | * | | | | | T_{fmax} (s) | |
| | Search Forwards | | | | | | | | | | |
| | Go to Min. Time | | | | | | | | | | |

### Example 2: Suitability test of potato samples for preparation of pickled potato strings

For a producer of pickled potato strings, it is important to be able to assess whether or not envisaged potatoes are suitable to be used as starting material for the said tudousi or not. Performing the texture analysis of the present invention will provide an objective indicator for the suitability of a lot of ware potatoes from a certain variety for this purpose. The indicator has a good predictive power to ascertain that the ware potato lot concerned indeed will deliver a tudousi grade product at the end of the production process.

Potatoes of the varieties Amandine (EU2504), Annabelle (EU6935), Franceline (EU175), Marilyn (EU17273), Cecile (EU14664), Charlotte (NL005990), Leontine (EU21350) and Gourmandine (EU8902), the numbers between brackets referring to corresponding plant breeders rights as indicated above, were peeled and cut in axial direction to strings of 2.5 x 2.5 mm, having a length of 30 - 150 mm with a Hallde RG200 vegetable cutter equipped with a 2.5 x 2.5 mm Julienne knife. Upon cutting the strings were washed twice in excess water (weight-water ratio 4) for the removal of starch granules that were liberated in the cutting process.

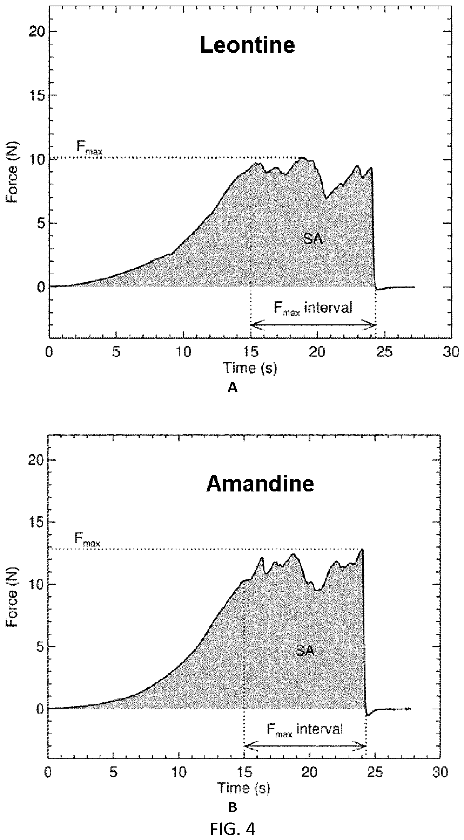

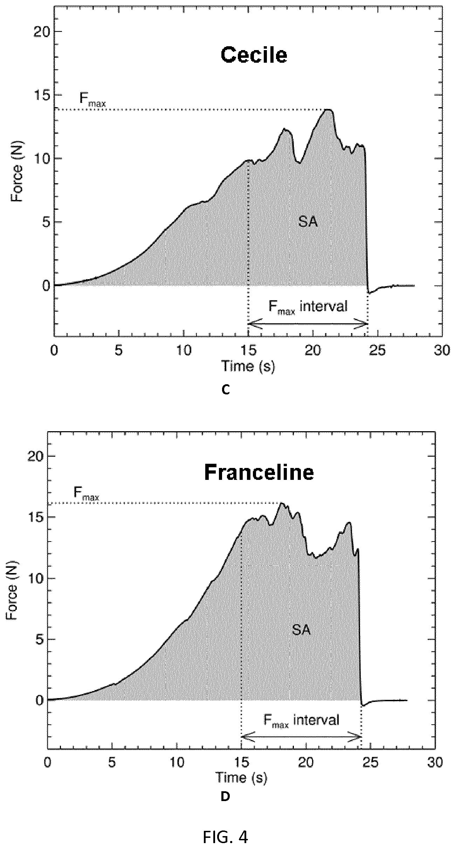

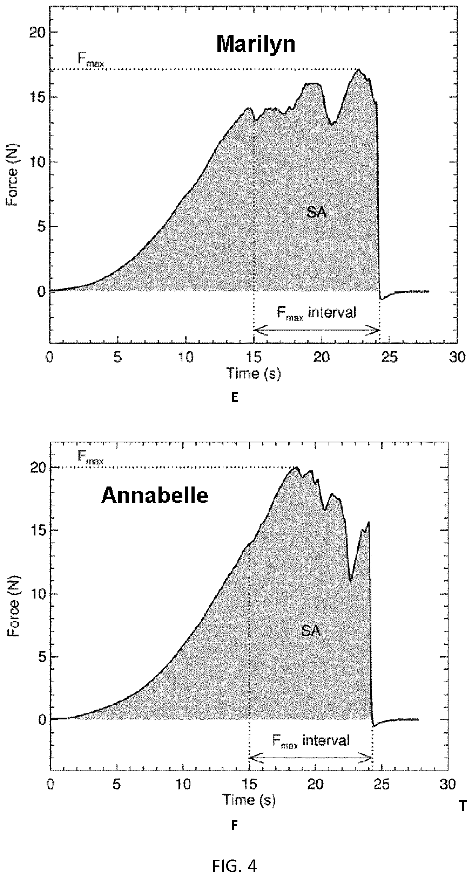

1 Kg of water washed strings of each variety were blanched in a Frymaster (Frymaster - E4 Electric Fryers RE17TC, 17 kW) with 26 litre of boiling water during 3 minutes. This preparation protocol represents quality control production circumstances to study if ware potato lot is suited for the production of chilled potato strings for retail and food chain use. After blanching, the potato string samples were taken from the boiling water, freed from adherent water on a sieve, and measured for texture using the texture protocol of example 1. Force-time curves of single measurements of the samples, as measured with the texture analyser protocol, from 6 of the 8 varieties covering the texture range are shown in figure 4A-F. The variety names of these examples are depicted in the figures. The time-force curves of the varieties show quite similar patterns to the first peak and peak time T_{FP} in the curve in the 14-21 seconds range and the positioning of Fmax values in the 15-24 s time interval. Table 2 gives an overview of the average Fmax, T_{FP} (also T_{FP}), T_{FM} (also T_{Fmax}) and SA values of the 8 varieties after quality control by ANOVA.

**Table 2: Predictive quality control protocol for Tudousi suitability expressed as average parameter values of n=6 measurements**

| Variety | Specific gravity (g/ml) | Fmax (N) | T_{FP} (S) | T_{Fmax} (s) | SA (Ns) |
|---|---|---|---|---|---|
| Amandine | 1.070 | 12.0 | 18.1 | 23.0 | 141.0 |
| Annabelle | 1.070 | 15.2 | 18.6 | 20.1 | 178.2 |
| Cecile | 1.078 | 11.3 | 16.2 | 21.0 | 156.0 |
| Charlotte | 1.081 | 9.7 | 15.3 | 19.7 | 127.1 |
| Franceline | 1.075 | 12.0 | 19.1 | 22.5 | 146.3 |
| Gourmandine | 1.078 | 9.7 | 14.7 | 21.6 | 132.0 |
| Leontine | 1.076 | 8.5 | 14.9 | 19.4 | 115.8 |
| Marilyn | 1.070 | 14.1 | 18.4 | 22.9 | 175.4 |
| LSD p=0.05 | | 1.7 | 3.0 | 3.1 | 32.6 |

According to the texture protocol, the varieties Amandine, Annabelle, Franceline and Marilyn have an average Fmax of 12 N or more, and an average SA of above 130 Ns, indicating that these varieties, at least the tested batches thereof, have a high level of firmness according to the texture measurements and are suitable to be used in the method of the invention to prepare pickled potato strings for tudousi.

### Example 3: Sensorial quality and texture of tudousi

Potatoes of the above-described varieties Amandine, Annabelle, Franceline, Leontine, Marilyn and of the varieties Agria (NL7603), Fontane (EU6748) and Challenger (EU20951) were peeled, cut into strings washed and blanched as described in example 2. However, blanching was performed for 1 minute. This protocol simulates the production of chilled potato strings for retail and food chain use.

The strings were taken from the boiling water, freed from adherent water on a sieve, and subsequently flash cooled to 4°C within 5 minutes using a Hobart Foster BCF21 blast chiller. Portions of 500 g of the chilled strings were each put in a glass jar of 1000 ml, containing 500 ml of pickling liquid, comprising 1% v/v acetic acid. After filling, the jars were closed with a lined metal screw cap and incubated for 40 minutes at 90°C and stored for 6 months at ambient temperature.

Subsequently, tudousi was prepared from 200 g of the stored potato strings as follows for the purpose of sensorial appraisal of the samples by a trained panel for a list of sensory attributes.

A pan having a Teflon coating and a diameter of 30 cm was gas-heated for about 90 s, where after 5 ml rice germ oil was put in the pan and heating was continued for another 30 s, so that the temperature in the middle of the pan is about 240°C. At that moment, 200 g of stored potato strings of the invention is loaded in the pan, and stirred each 10 s. After another 30 seconds, i.e. 3 minutes after starting heating the pan, 5 ml of a salt solution (5 g table salt in 0.5 l tap water) was added. Stirring was continued each 10 s. Again 30 s later, the tudousi was put on plates, having a temperature of 65 - 70 °C.

The tudousi samples were evaluated on 6 attributes: (1)appearance in the glass jar, (2) the dominant texture attribute upon the first chew in the mouth, (3) firmness, (4) the main taste sensation upon chewing, (5) mouth clearance as parameter for the time that is needed before the product can be swallowed and (6) the consistency or integrity of strings upon chewing as a disintegration parameter during chewing).

Appearance of the strings in the jars was scored in 3 turbidity classes: clear, turbid, very turbid. The dominant first texture attribute was related to crunchiness and scored as crunchy or not crunchy. Firmness was scored on 3 levels: firm, rather firm and soft. The main taste sensation upon chewing was scored as juicy or starchy. The rate of mouth clearance was scored as fast or slow. The consistency of the strings upon chewing was scored as coherent (when strings can be chewed into smaller coherent pieces) or granular (when strings disintegrate into random granular structures that stick to the mouth palate). See table 3.

To this end a 5 member in house expert panel from HZPC Holland BV) was previously trained in 3 consecutive days for the consistent scoring of the 6 attributes using pickled potato strings samples with wide expression ranges for the attributes of interest. The trained panel was ultimately evaluating the tudousi samples from the 7 varieties in a random order in duplicate according to best sensorial practice (blind, coded, uniform light, according to the given wording).

**Table 3: Sensorial evaluation of stir-fried pickled tudousi**

| Variety | Appearance pickling liquid | Texture | Firm ness | Taste | Clearance | Consistency |
|---|---|---|---|---|---|---|
| | | | | | | |
| Amandine | Clear | Crunchy | Firm | Juicy | Fast | Coherent |
| Annabelle | Clear | Crunchy | Firm | Juicy | Fast | Coherent |
| Franceline | Clear | Crunchy | Firm | Juicy | Fast | Coherent |
| Marilyn | Clear | Crunchy | Firm | Juicy | Fast | Coherent |
| Leontine | Turbid | Not crunchy | Soft | Starchy | Slow | Granular |
| Agria | Turbid | Not crunchy | Soft | Starchy | Slow | Granular |
| Fontane | Very turbid | Not crunchy | Soft | Starchy | Slow | Granular |
| Challenger | Very turbid | Not crunchy | Rather firm | Starchy | Slow | Granular |

It can clearly be seen that in particular the varieties Amandine, Annabelle, Franceline and Marilyn, unlike the other 4 varieties, are high in the level of perceived firmness and crunchiness producing strings with a clear appearance in the jar upon pickling. This level of crunchy and firm texture is associated with a juicy texture upon chewing and faster clearance of the product in the mouth. The data of the 4 overlapping varieties of the sensory attributes from table 3 correlate highly with the texture parameters from table 2, indicating that these sensorial attributes can be associated with the texture parameters Fmax and SA as derived from measurements with a texture analyser during the suitability test.

Similar results were obtained when pickling was performed for 1 - 1.5 hour at 65°C, or for 0,75 - 1 hour at 80°C, and when the jars were stored for 1 months, or 12 months.

Potato varieties that deliver pickled potato strings according to this invention combine a clear appearance in the jars with crunchy texture, firmness, juiciness, fast clearance and coherent structure of the strings. In particular potato varieties Agria, Fontane and Challenger, which each have a specific gravity of over 1,085 and further do not fulfil the texture requirements as identified herein (data not shown) combine a turbid appearance in jars with lack of crunchy texture, and presence of softness, starchy character, slow clearance and granular structure of the strings.

### Example 4: Determination of the proper heating conditions

Strings as prepared above from the varieties Franceline and Leontine were heated in six different ways.
1: batch-wise blanching as described in example 6 for 1 minute
2: batch-wise blanching as described in example 8 for 3 minutes
3 batch-wise blanching for 5 minutes
4: continuous blanching at 90 °C
5: continuous blanching at 95 °C
6: continuous blanching at 99 °C

Table 4 describes the conditions of the 3 batch-wise processes and 3 continuous production processes for potato strings for the varieties Franceline and Leontine as described in example 7 at increasing heating intensities for the batch process (1 to 5 min blanching time) and the continuous process (blanching with water and steam at temperatures from 90 to 99 °C). These treatments are designed for the identification of the optimal heating time for the potato strings product according to batch and continuous production principles.

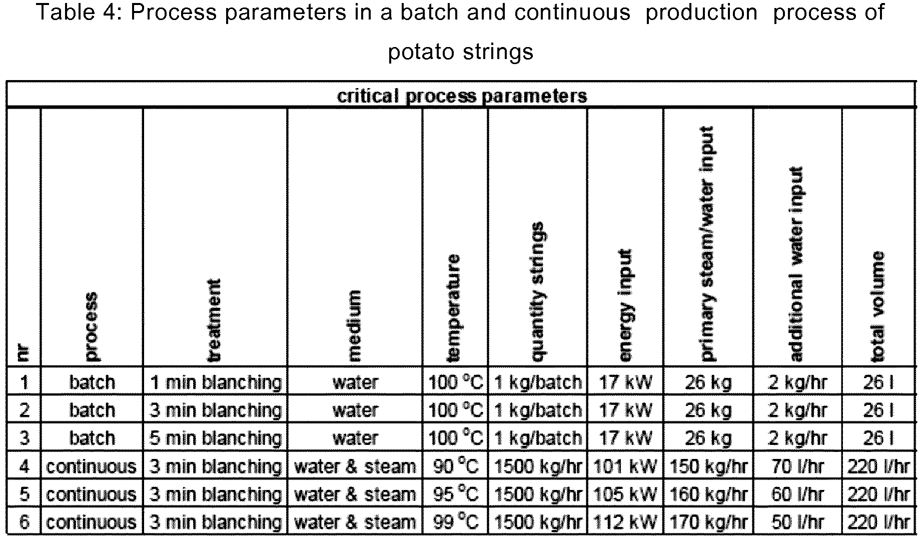

Texture measurements as described in example 6 were performed on the strings samples produced by the 6 different treatments and data obtained are summarized in table 5.

**Table 5: Texture parameters of Franceline and Leontine strings in a batch and continuous production process after table 4 expressed as average parameter values of n=6 measurements**

| | Franceline | | | | Leontine | | | |
|---|---|---|---|---|---|---|---|---|
| process nr | Fmax (N) | T_{fp} (s) | T_{Fmax} (s) | SA (Ns) | Fmax (N) | T_{fp} (s) | T_{Fmax} (s) | SA (Ns) |
| 1 | 15.3 | 17.1 | 21.4 | 152.4 | 12.5 | 16.0 | 19.5 | 129.7 |
| 2 | 15.2 | 17.4 | 21.6 | 150.9 | 10.5 | 15.5 | 19.6 | 117.8 |
| 3 | 12.1 | 15.9 | 21.3 | 130.0 | 8.5 | 15.2 | 19.4 | 95.8 |
| 4 | 15.6 | 16.9 | 21.4 | 154.7 | 12.7 | 15.9 | 19.7 | 130.1 |
| 5 | 15.3 | 17.2 | 21.5 | 151.9 | 9.9 | 15.6 | 19.3 | 116.8 |
| 6 | 12.2 | 15.8 | 20.9 | 127.8 | 8.3 | 15.3 | 19.4 | 97.4 |
| LSD p=0.05 | 1.7 | 3.0 | 3.1 | 32.6 | 1.7 | 3.0 | 3.1 | 32.6 |

The texture data from table 5 indicate that the texture parameters Fmax and SA decrease as a function of blanching time in the batch treatments 1-3 and the continuous process treatments 4-6 for both varieties. The decline is more pronounced for the variety Leontine than for Franceline in line with the (lack of) suitability of these varieties for the potato strings product. For Franceline, the processing window from blanching perspective is preferably between 1 and 3 minutes in the batch process, although 5 minutes also results in texture values within the desired range. For the continuous process, the preferred window comprises 90 and 95 °C under the given conditions, whereas at 99 °C the SA value becomes a bit low. This indicates that blanching time and blanching temperature settings can be optimized when preparing the blanched potato strings intended as basis material for pickled potato strings production and ultimately for tudousi preparation. Over-processing may lead to loss of texture in suitable varieties like Franceline.

### Example 5: Preparation of tudousi and storage at different conditions

The production of tudousi was done by 4 distinct processes that ultimately yield chilled, frozen, freeze dried and pickled products.

Potatoes from the variety Annabelle were peeled, cut into strings, washed and blanched as described in example 7 for 1 minute. The blanched product was subsequently further treated in the following 4 ways:
1. Blast chilled to 4°C in a period of 5 minutes using a Hobart Foster BCF21 blast chiller and packed in 1 kg plastic containers with lid and stored in the refrigerator at 4°C.
2. Blast chilled to -20°C in 8 minutes using a Hobart Foster BCF21 blast chiller and packed in 1 kg plastic containers with lid and stored in the freezer at -20°C.
3. Blast chilled to -20°C in 8 minutes using a Hobart Foster BCF21 blast chiller, freeze dried with a Labconco freeze dryer equipped with a sample chamber with heated shelves programmed at 35°C in 24 hours to 99.8% dry matter and subsequently packed in sealed PE bags in portions of 250g under protective atmosphere and stored at room temperature in darkness.
4. Blast chilled to 4°C for 5 minutes, transfer in pickling medium in glass jars, pickled 40 minutes at 90°C in 1% acetic acid and stored for 1 month.

**Table 6: preparation and storage conditions of instant tudousi**

| description | chilled tudousi | frozen tudousi | freeze dried tudousi | pickled tudousi |
|---|---|---|---|---|
| blanching | 1 minute 100°C | 1 minute 100°C | 1 minute 100°C | 1 minute 100°C |
| blast chilling | 5 minutes 4°C | 8 minutes -20°C | 8 minutes -20°C | 5 minutes 4°C |
| freeze drying | not applicable | not applicable | 24 hours to 99,8% dry matter | not applicable |
| additional processing | not applicable | not applicable | not applicable | pickling process 40 minutes at 90°C in 1% acetic acid |
| packaging | plastic containers with lid | plastic containers with lid | PE bag under protective atmosphere | glass jars with screw lid |
| storage | at 4°C | at -20 °C | at room temperature (15-20°C) in darkness | at room temperature (15-20°C) |

When frozen tudousi is prepared like chilled tudousi according to the protocol of example 8, will the heating process take about 1 minute longer to prepare a ready to eat product with a comparable visual appearance and serving temperature. Prepared tudousi from a frozen condition has similar texture, structure and flavour profiles like the product from chilled origin.

When freeze dried tudousi is dehydrated in water in a ratio of 1 part tudousi : 3 parts water and subsequently prepared like chilled tudousi according to the protocol of example 3, will the heating process take the same time like for the chilled tudousi to prepare a ready to eat product with a comparable visual appearance and serving temperature. Prepared tudousi from a freeze dried origin has similar texture, structure and flavour profiles like the product from chilled or frozen origin.

The tudousi, prepared from the pickled potato strings, had similar texture and structure profiles like the product from chilled origin, but had a more pronounced acid in taste.

## Claims

1. Method for the preparation of pickled potato strings, comprising the steps of:
a) Providing potatoes having a dry matter content, expressed as specific gravity, of between 1.040 and 1.075 g/ml,
b) Cutting the potatoes of step a) in strings having a cross-sectional area of 25 mm² or less,
c) Heating the potato strings of step b) to a temperature of 140°C or less,
d) Blast chilling the heated potato strings of step c) within 25 minutes to ambient temperature or less,
e) Incubating the blast chilled potato strings of step d) in a liquid pickling medium having a pH between 3 and 4.5 at an elevated temperature of at least 65°C.

2. Method according to claim 1, wherein the potato strings in step c):
- have a uniform cross-sectional area, and/or
- are cut to a cross-sectional area of 20 mm² or less, preferably 16 mm² or less, more preferably of 10 mm² or less, most preferably of 7 mm² or less, and/or
- have a rectangular cross-sectional area, preferably a square, and/or
- for at least 80%, preferably at least 90% thereof have a length of 30 - 150 mm, preferably of 40 - 130 mm.

3. Method according to claim 1 or 2, wherein in step c) the heating is chosen such, that a texture measurement on the heated potato strings after step c) according to the following protocol:
i. loading 160g of heated potato strings having a cross sectional area of 2.5 x 2.5 mm, of which at least 90% has a length of 30 - 150 mm, directly after the said step c) in a chamber having a top and a bottom wall, a height of 40 mm, a length of 100 mm and a width of 70 mm, which top wall has 3 slits, each having a length of 65 mm and a width of 5 mm, the slits having a distance of 2 cm to one another and oriented in parallel to one another, and perpendicular to the axis of the chamber,
ii. closing the chamber,
iii. moving sequentially through each slit in vertical direction towards the bottom wall of the chamber with a speed of 1.0 mm/s over a distance of 24 mm, a probe cutting blade having a lower cutting portion 31 having length of 60 mm and a height of 5.7 mm between a lower side and an upper side thereof, at said lower side a lower sharp cutting edge being arranged having a length of 53 mm, flanked by rounded edges, the upper side of the cutting portion being adjacent to a lower side of a blade portion 3 the length thereof rejuvenating over a height of 34 mm to an upper side having a length of 46 mm and a thickness at the upper side of 2 mm, the thickness of the blade portion 3 rejuvenating from the upper side thereof with an angle of 1° between the front and back side thereof towards the cutting portion, said cutting portion rejuvenating from the upper side thereof with an angle of 6° between the front and back side thereof to the lower sharp cutting edge with a calibrated sharpness of 2.08 - 2.44 N,
iv. during said moving, measuring the resistance force exerted on the blade as soon as the said force exceeds a threshold of 0.49 N, steps i - iv being performed at 60°C,
v. repeating steps i. -iv., resulting in 6 measurements,
vi. calculating the parameters Fmax (maximum average resistance force) and SA (average surface area, defined as the surface under a graph, reflecting the resistance force curve in time during each measurement of steps iv.) from the 6 measurements wherein outlier values outside the 95% confidence interval by variance analysis (ANOVA) are excluded from the calculation,
results in an Fmax of at least 12 N above the threshold, and SA of at least 130 Ns.

4. Method according to any of the preceding claims 41 - 49, wherein in step c):
- the potato strings are heated to 120 °C or less, preferably to about 100°C, and/or
- the potato strings are heated to at least 70°C, preferably to at least 80°C, more preferably at least 90°C, and/or
- the heating time is 180 s. or less, preferably 100 s. or less, more preferably 80 s. or less, even more preferably 70 s. or less, most preferably about 50-60 s, and/or
- the heating time is at least 30 s., more preferably at least 50 s, and/or
- the potato strings in step c) are heated in water or by steam.

5. Method according to any of the preceding claims, wherein in step d):
- the blast chilling is performed for 10 minutes or less, preferably for 8 minutes or less, more preferably for 6 minutes or less, and most preferably for 5 minutes or less, and/or
- the heated potato strings are blast chilled to a temperature between 25°C and 1°C, and/or
- the heated potato strings are blast chilled to 15°C or less, preferably 10°C or less, more preferably to 7°C or less, most preferably to 3 - 5°C and/or
- the potato strings are contacted with a forced air stream having a temperature of between 25°C and 1°C, and/or
- the potato strings are contacted with a liquid having a temperature of between 25°C and 1°C, preferably of 15 °C - 4 °C, the liquid preferably being an aqueous liquid.

6. Method according to any of the preceding claims, wherein the potato strings have a dry matter content of between 16 and 19 w/w% during steps b), c) and d).

7. Method according to any of the preceding claims, wherein the liquid pickling medium:
- is an aqueous medium, and/or
- has a pH of between 3.5 and 4.3, and/or
- comprises an acid chosen from the group, consisting of acetic acid, citric acid, malic acid, lactic acid or a combination of two or more thereof, the pickling medium preferably comprising acetic acid, in particular vinegar, the pickling medium preferably comprising 0.5 - 5 v/v%, more preferably 1- 2 v/v% vinegar.

8. Method of any of the preceding claims, wherein in step e):
- the elevated temperature is below 100°C, and/or
- the elevated temperature in step e) is between 80 and 95°C, preferably at about 90°C, and/or
- the incubation at the elevated temperature is for at least 20 minutes, preferably at least 30 minutes, most preferably at least 40 minutes, and/or
- the incubation at the elevated temperature is for at most 120 minutes, preferably at most 90 minutes, most preferably at most 60 minutes, and/or
- comprises filling the blast chilled potato strings of step d) and the pickling liquid in a container and closing the container before incubating the potato strings at elevated temperature.

9. Method of any of the preceding claims, wherein:
step d) comprises adding the heated potato strings of step c) to the pickling liquid of step e), said pickling liquid having a temperature of 1 - 25°C, and
step e) comprises heating the pickling liquid comprising the potato strings of step d) to the elevated temperature of at least 65°C and incubating at the said temperature.

10. Method of any of the preceding claims, further comprising a step f) of storing the pickled potato strings of step e) in the liquid pickling medium in a closed container, step f) preferably being:
- at ambient temperature, and/or
- performed for at least a month, more preferably at least 6 months.

11. Method for the determination of suitability of a batch of potatoes for use in the method according to any of the previous claims, comprising the following steps:
A) providing peeled potatoes,
B) cutting the peeled potatoes in strings with a cross sectional area of 2.5 x 2.5 mm, of which at least 90% has a length of 30 - 150 mm,
C) blanching the said potato strings in boiling water during 3 minutes,
D) loading 160 g of the blanched potato strings in a container having a top and a bottom wall, a height of 40 mm, a length of 100 mm and a width of 70 mm, which top wall has 3 slits, each having a length of 65 mm and a width of 5 mm, the slits having a distance of 2 cm to one another and oriented in parallel to one another, and perpendicular to the axis of the chamber,
E) closing the chamber,
F) moving sequentially through each slit in vertical direction towards the bottom wall of the chamber with a speed of 1.0 mm/s over a distance of 24 mm, a probe cutting blade having a lower cutting portion 31 having length of 60 mm and a height of 5.7 mm between a lower side and an upper side thereof, at said lower side a lower sharp cutting edge being arranged having a length of 53 mm, flanked by rounded edges, the upper side of the cutting portion being adjacent to a lower side of a blade portion 3 the length thereof rejuvenating over a height of 34 mm to an upper side having a length of 46 mm and a thickness at the upper side of 2 mm, the thickness of the blade portion 3 rejuvenating from the upper side thereof with an angle of 1° between the front and back side thereof towards the cutting portion, said cutting portion rejuvenating from the upper side thereof with an angle of 6° between the front and back side thereof to the lower sharp cutting edge with a calibrated sharpness of 2.08 - 2.44 N, during said moving, measuring the resistance force exerted on the blade as soon as the said force exceeds a threshold of 0.49 N, steps D) - F) being performed at 60°C,
G) repeating steps D) - F), resulting in 6 measurements,
H) calculating the parameters Fmax (maximum average resistance force) and SA (average surface area, defined as the surface under a graph, reflecting the resistance force curve in time during each measurement of steps G) from the 6 measurements wherein outlier values outside the 95% confidence interval by variance analysis (ANOVA) are excluded from the calculation,
I) determine the potatoes as suitable if the Fmax is at least 12 N above the threshold, and the SA is at least 130 Ns.

12. Method according to claim 3 or 11, wherein:
- Fmax is at least 13 N, preferably at least 14 N above the threshold, and the SA is at least 140 Ns, and/or
- the time T_{FP} to reach the first peak on the time-force curve is 14 - 21, preferably 15
- 20 s, and/or
- the time T_{FM} to reach Fmax is 15 - 24 s.

13. Method according to any of the preceding claims, wherein the potatoes of step a) or A):
- have a dry matter content, expressed as specific gravity, of between 1.045 and 1.075 g/ml, most preferably between 1.050 and 1.070 g/ml, and/or
- have a value of 1 - 4 on the 1 - 7 waxy/floury scale, preferably of 1 - 3, more preferably of 1 - 2 and most preferably of 1, and/or
- originate from a variety, chosen from the group, consisting of Amandine (EU2504), Annabelle (EU6935), Franceline (EU175), Marilyn (EU17273), and varieties derived therefrom.

14. Pickled potato strings, obtainable by the method according to any of the claims 1 - 10.

15. Method for the preparation of stir-fried pickled potato strings, comprising the step of stir-frying the pickled potato strings, as obtained by the method according to any of the claims 1 - 10, wherein the potato strings are preferably stir-fried in oil, wherein the amount of oil, on weight basis, is 1 - 20 % of that of the potato strings, preferably 2 - 5 %.

## Patentansprüche

1. Verfahren zur Herstellung eingelegter Kartoffelstreifen, umfassend die Schritte:
a) Bereitstellen von Kartoffeln mit einem Trockenmassegehalt, ausgedrückt als spezifisches Gewicht, zwischen 1,040 und 1,075 g/ml,
b) Schneiden der Kartoffeln gemäß Schritt a) in Streifen mit einer Querschnittsfläche von 25 mm² oder weniger,
c) Erhitzen der Kartoffelstreifen gemäß Schritt b) auf eine Temperatur von 140 °C oder weniger,
d) Schnellkühlen der erhitzten Kartoffelstreifen gemäß Schritt c) innerhalb von 25 Minuten auf Umgebungstemperatur oder weniger,
e) Inkubieren der schnellgekühlten Kartoffelstreifen gemäß Schritt d) in einem flüssigen Einlegmedium mit einem pH-Wert zwischen 3 und 4,5 bei einer erhöhten Temperatur von mindestens 65 °C.

2. Verfahren gemäß Anspruch 1, wobei die Kartoffelstreifen gemäß Schritt c):
- eine gleichförmige Querschnittsfläche aufweisen und/oder
- auf eine Querschnittsfläche von 20 mm² oder weniger, vorzugsweise 16 mm² oder weniger, besonders bevorzugt 10 mm² oder weniger, höchst bevorzugt 7 mm² oder weniger, zugeschnitten sind und/oder
- eine rechteckige Querschnittsfläche, vorzugsweise eine quadratische Querschnittsfläche aufweisen und/oder
- mindestens 80 %, vorzugsweise mindestens 90 %, der Kartoffelstreifen eine Länge von 30-150 mm, vorzugsweise 40-130 mm, aufweisen.

3. Verfahren gemäß Anspruch 1 oder 2, wobei in Schritt c) das Erhitzen so gewählt wird, dass eine Messung der Beschaffenheit an den erhitzten Kartoffelstreifen nach Schritt c) gemäß folgendem Protokoll:
i. Laden von 160 g der erhitzten Kartoffelstreifen mit einer Querschnittsfläche von 2,5 x 2,5 mm, von denen mindestens 90 % eine Länge von 30-150 mm aufweisen, direkt nach dem Schritt c) in eine Kammer mit einer oberen Wand und einer Bodenwand, mit einer Höhe von 40 mm, einer Länge von 100 mm und einer Breite von 70 mm, wobei die obere Wand drei Schlitze aufweist, die jeweils eine Länge von 65 mm und eine Breite von 5 mm aufweisen, wobei die Schlitze einen Abstand von 2 cm zueinander aufweisen und parallel zueinander und senkrecht zu der Achse der Kammer ausgerichtet sind,
ii. Schließen der Kammer,
iii. Bewegen einer Sonden-Schneidklinge, die einen unteren Schneidteil 31 mit einer Länge von 60 mm und einer Höhe von 5,7 mm zwischen ihrer Unterseite und Oberseite aufweist, nacheinander durch jeden Schlitz in senkrechter Richtung in Richtung auf die Bodenwand der Kammer mit einer Geschwindigkeit von 1,0 mm/s über eine Distanz von 24 mm, wobei an der Unterseite eine untere scharfe Schneidkante ausgebildet ist, die eine Länge von 53 mm aufweist und von abgerundeten Kanten begrenzt ist, wobei die Oberseite des Schneidteils benachbart zu der Unterseite eines Klingenteils 3 angeordnet ist, dessen Länge sich über eine Höhe von 34 mm zu einer Oberseite mit einer Länge von 46 mm und einer Dicke an der Oberseite von 2 mm verjüngt, wobei sich die Dicke des Klingenteils 3 von seiner Oberseite mit einem Winkel von 1° zwischen seiner Vorder- und Rückseite in Richtung auf das Schneidteil verjüngt, wobei sich das Schneidteil von seiner Oberseite mit einem Winkel von 6° zwischen seiner Vorder- und Rückseite zu der unteren scharfen Schnittkante, die eine kalibrierte Schärfe von 2,08-2,44 N aufweist, verjüngt,
iv. Messen der Widerstandskraft, die auf die Klinge während der Bewegung ausgeübt wird, , sobald die Kraft einen Schwellenwert von 0,49 N übersteigt, wobei die Schritte i-iv bei 60 °C durchgeführt werden,
v. Wiederholen der Schritte i.-iv., um 6 Messungen zu erreichen,
vi. Berechnen der Parameter Fmax (maximale mittlere Widerstandskraft) und SA (mittlerer Flächenbereich, definiert als die Fläche unter einer Kurve, die die Kurve der Widerstandskraft zum Zeitpunkt jeder Messung der Schritte iv. wiedergibt) aus den 6 Messungen, wobei Ausreißer außerhalb des 95-%-Konfidenzintervalls einer Varianzanalyse (ANOVA) aus der Berechnung ausgeschlossen werden,
eine Fmax von mindestens 12 N über dem Schwellenwert und eine SA von mindestens 130 Ns ergibt.

4. Verfahren gemäß einem der vorstehenden Ansprüche 1-3, wobei in Schritt c):
- die Kartoffelstreifen auf 120 °C oder weniger, vorzugsweise auf etwa 100 °C, erhitzt werden und/oder
- die Kartoffelstreifen auf mindestens 70 °C, vorzugsweise auf mindestens 80 °C, besonders bevorzugt auf mindestens 90 °C, erhitzt werden und/oder
- die Heizdauer 180 s oder weniger, vorzugsweise 100 s oder weniger, besonders bevorzugt 80 s oder weniger, noch bevorzugter 70 s oder weniger, höchst bevorzugt 50-60 s, beträgt und/oder
- die Heizdauer mindestens 30 s, besonders bevorzugt mindestens 50 s, beträgt und/oder
- die Kartoffelstreifen in Schritt c) in Wasser oder durch Dampf erhitzt werden.

5. Verfahren gemäß einem der vorstehenden Ansprüche, wobei in Schritt d):
- das Schnellkühlen für 10 Minuten oder weniger, vorzugsweise für 8 Minuten oder weniger, besonders bevorzugt für 6 Minuten oder weniger und höchst bevorzugt für 5 Minuten oder weniger durchgeführt wird und/oder
- die erhitzten Kartoffelstreifen auf eine Temperatur zwischen 25 °C und 1 °C schnellgekühlt werden und/oder
- die erhitzten Kartoffelstreifen auf 15 °C oder weniger, vorzugsweise 10 °C oder weniger, besonders bevorzugt 7 °C oder weniger, höchst bevorzugt 3-5 °C, schnellgekühlt werden und/oder
- die Kartoffelstreifen mit einem Druckluftstrom mit einer Temperatur von zwischen 25 °C und 1 °C in Kontakt gebracht werden und/oder
- die Kartoffelstreifen mit einer Flüssigkeit mit einer Temperatur zwischen 25 °C und 1 °C, vorzugsweise 15 °C bis 4 °C, in Kontakt gebracht werden, wobei die Flüssigkeit vorzugsweise eine wässrige Flüssigkeit ist.

6. Verfahren gemäß einem der vorstehenden Ansprüche, wobei die Kartoffelstreifen während der Schritte b), c) und d) einen Trockenmassegehalt zwischen 16 und 19 Gew./Gew.-% aufweisen.

7. Verfahren gemäß einem der vorstehenden Ansprüche, wobei das flüssige Einlegmedium:
- ein wässriges Medium ist und/oder
- einen pH-Wert zwischen 3,5 und 4,3 aufweist und/oder
- eine Säure enthält, ausgewählt aus der Gruppe umfassend Essigsäure, Citronensäure, Apfelsäure, Milchsäure oder eine Kombination von zwei oder mehr derselben, wobei das Einlegmedium vorzugsweise Essigsäure, insbesondere Essig, , vorzugsweise 0,5-5 Vol./Vol.-% Essig, besonders bevorzugt 1-2 Vol./Vol.-% Essig umfasst.

8. Verfahren gemäß einem der vorstehenden Ansprüche, wobei in Schritt e):
- die erhöhte Temperatur weniger als 100 °C beträgt und/oder
- die erhöhte Temperatur in Schritt e) zwischen 80 und 95 °C, vorzugsweise etwa 90 °C, beträgt und/oder
- die Inkubation bei der erhöhten Temperatur für mindestens 20 Minuten, vorzugsweise mindestens 30 Minuten, höchst bevorzugt mindestens 40 Minuten, erfolgt und/oder
- die Inkubation bei der erhöhten Temperatur für höchstens 120 Minuten, vorzugsweise höchstens 90 Minuten, höchst bevorzugt höchstens 60 Minuten, erfolgt und/oder
- das Füllen der schnellgekühlten Kartoffelstreifen gemäß Schritt d) und der Einlegflüssigkeit in einen Behälter und Schließen des Behälters vor dem Inkubieren der Kartoffelstreifen bei einer erhöhten Temperatur erfolgt.

9. Verfahren gemäß einem der vorstehenden Ansprüche, wobei:
Schritt d) das Zugeben der erhitzten Kartoffelstreifen gemäß Schritt c) zu der Einlegflüssigkeit gemäß Schritt e) umfasst, wobei die Einlegflüssigkeit eine Temperatur von 1-25 °C aufweist, und
Schritt e) das Erhitzen der Einlegflüssigkeit, die die Kartoffelstreifen gemäß Schritt d) beinhaltet, auf die Temperatur von mindestens 65 °C und das Inkubieren bei dieser Temperatur umfasst.

10. Verfahren gemäß einem der vorstehenden Ansprüche, ferner umfassend einen Schritt f) des Einlagerns der eingelegten Kartoffelstreifen gemäß Schritt e) in dem flüssigen Einlegmedium in einem geschlossenen Behälter, wobei Schritt f) vorzugsweise:
- bei Umgebungstemperatur erfolgt und/oder
- für mindestens einen Monat, besonders bevorzugt für mindestens 6 Monate durchgeführt wird.

11. Verfahren zur Bestimmung der Eignung einer Charge von Kartoffeln zur Verwendung bei dem Verfahren gemäß einem der vorstehenden Ansprüche, umfassend die folgenden Schritte:
A) Bereitstellen von geschälten Kartoffeln,
B) Schneiden der geschälten Kartoffeln zu Streifen mit einer Querschnittsfläche von 2,5 x 2,5 mm, von denen mindestens 90 % eine Länge von 30-150 mm aufweisen,
C) Blanchieren der Kartoffelstreifen in kochendem Wasser für 3 Minuten,
D) Laden von 160 g der blanchierten Kartoffelstreifen in einen Behälter mit einer oberen Wand und einer Bodenwand, einer Höhe von 40 mm, einer Länge von 100 mm und einer Breite von 70 mm, wobei die obere Wand drei Schlitze aufweist, die jeweils eine Länge von 65 mm und eine Breite von 5 mm aufweisen, wobei die Schlitze einen Abstand von 2 cm zueinander aufweisen und parallel zueinander und senkrecht zu der Achse der Kammer ausgerichtet sind,
E) Schließen der Kammer,
F) Bewegen einer Sonden-Schneidklinge, die einen unteren Schneidteil 31 mit einer Länge von 60 mm und einer Höhe von 5,7 mm zwischen ihrer Unterseite und Oberseite aufweist, nacheinander durch jeden Schlitz in senkrechter Richtung in Richtung auf die Bodenwand der Kammer mit einer Geschwindigkeit von 1,0 mm/s über eine Distanz von 24 mm, wobei an der Unterseite eine untere scharfe Schneidkante ausgebildet ist, die eine Länge von 53 mm aufweist und von abgerundeten Kanten begrenzt ist, wobei die Oberseite des Schneidteils benachbart zu der Unterseite eines Klingenteils 3 angeordnet ist, dessen Länge sich über eine Höhe von 34 mm zu einer Oberseite mit einer Länge von 46 mm und einer Dicke an der Oberseite von 2 mm verjüngt, wobei sich die Dicke des Klingenteils 3 von seiner Oberseite mit einem Winkel von 1° zwischen seiner Vorder- und Rückseite in Richtung auf das Schneidteil verjüngt, wobei sich das Schneidteil von seiner Oberseite mit einem Winkel von 6° zwischen seiner Vorder- und Rückseite zu der unteren scharfen Schnittkante, die eine kalibrierte Schärfe von 2,08-2,44 N aufweist, verjüngt, wobei während der Bewegung das Messen der Widerstandskraft, die auf die Klinge ausgeübt wird, sobald die Kraft einen Schwellenwert von 0,49 N übersteigt, erfolgt, wobei die Schritte D) bis F) bei 60 °C durchgeführt werden,
G) Wiederholen der Schritte D) bis F), um 6 Messungen zu erreichen,
H) Berechnen der Parameter Fmax (maximale mittlere Widerstandskraft) und SA (mittlerer Flächenbereich, definiert als die Fläche unter einer Kurve, die die Kurve der Widerstandskraft zum Zeitpunkt jeder Messung der Schritte G wiedergibt) aus den 6 Messungen, wobei Ausreißer außerhalb des 95-%-Konfidenzintervalls einer Varianzanalyse (ANOVA) aus der Berechnung ausgeschlossen werden,
I) Bewerten der Kartoffeln als geeignet, wenn die Fmax mindestens 12 N über dem Schwellenwert liegt und die SA mindestens 130 Ns beträgt.

12. Verfahren gemäß Anspruch 3 oder 11, wobei:
- Fmax mindestens 13 N, vorzugsweise mindestens 14 N, über dem Schwellenwert liegt und die SA mindestens 140 Ns beträgt und/oder
- die Zeit T_{FP} zum Erreichen des ersten Maximums der Zeit-Kraft-Kurve 14-21, vorzugsweise 15-20 s, beträgt und/oder
- die Zeit T_{FM} zum Erreichen von Fmax 15-24 s beträgt.

13. Verfahren gemäß einem der vorstehenden Ansprüche, wobei die Kartoffeln gemäß Schritt a) oder A):
- einen Trockenmassegehalt, ausgedrückt als spezifisches Gewicht, zwischen 1,045 und 1,075 g/ml, höchst bevorzugt zwischen 1,050 und 1,070 g/ml, aufweisen und/oder
- einen Wert von 1-4 auf der 1-7-festkochend/mehlig-Skala, vorzugsweise 1-3, besonders bevorzugt 1-2 und höchst bevorzugt 1, aufweisen und/oder
- aus einer Sorte stammen, ausgewählt aus der Gruppe bestehend aus Amandine (EU2504), Annabelle (EU6935), Franceline (EU175), Marilyn (EU17273) und daraus abgeleiteten Sorten.

14. Eingelegte Kartoffelstreifen, hergestellt nach dem Verfahren gemäß einem der Ansprüche 1-10.

15. Verfahren zur Herstellung von in einer Pfanne frittierten, eingelegten Kartoffelstreifen, umfassend den Schritt des Frittierens der eingelegten Kartoffelstreifen, hergestellt nach dem Verfahren gemäß einem der Ansprüche 1-10, wobei die Kartoffelstreifen vorzugsweise in Öl frittiert werden, wobei die Menge an Öl s 1-20 %, vorzugsweise 2-5 %, des Gewichts der Kartoffelstreifen beträgt.

## Revendications

1. Procédé de préparation de bâtonnets de pommes de terre marinés, comprenant les étapes de :
a) fournir des pommes de terre ayant une teneur en matière sèche, exprimée en gravité spécifique, entre 1,040 et 1,075 g/ml,
b) couper les pommes de terre de l'étape a) en bâtonnets ayant une surface transversale de 25 mm² ou moins,
c) chauffer les bâtonnets de pommes de terre de l'étape b) à une température de 140°C ou moins,
d) refroidir rapidement les bâtonnets de pommes de terre chauffés de l'étape
c) pendant 25 minutes à température ambiante ou moins,
e) incuber les bâtonnets de pommes de terre refroidis rapidement de l'étape d) dans une marinade liquide ayant un pH entre 3 et 4,5 à une température élevée d'au moins 65°C.

2. Procédé selon la revendication 1, dans lequel les bâtonnets de pommes de terre de l'étape c) :
- ont une surface transversale uniforme, et/ou
- sont coupées en une surface transversale de 20 mm² ou moins, de préférence 16 mm² ou moins, plus préférablement de 10 mm² ou moins, le plus préférablement de 7 mm² ou moins, et/ou
- ont une surface transversale rectangulaire, de préférence carrée, et/ou
- pour au moins 80%, de préférence au moins 90% d'entre eux ont une longueur de 30 à 150 mm, de préférence de 40 à 130 mm.

3. Procédé selon la revendication 1 ou 2, dans lequel dans l'étape c) le chauffage est choisi de sorte, qu'une mesure de texture sur les bâtonnets de pommes de terre chauffés après l'étape c) selon le protocole suivant :
i. charger 160g de bâtonnets de pommes de terre chauffés ayant une surface transversale de 2,5 x 2,5 mm, dont au moins 90% ont une longueur de 30 à 150 mm, directement après ladite l'étape c) dans une chambre ayant une paroi supérieure et inférieure, une hauteur de 40 mm, une longueur de 100 mm et une largeur de 70 mm, dont la paroi supérieure a 3 fentes, chacune ayant une longueur de 65 mm et une largeur de 5 mm, les fentes ayant une distance de 2 cm entre elles et étant orientées parallèlement les unes par rapports aux autres, et perpendiculairement par rapport à l'axe de la chambre,
ii. fermer la chambre,
iii. déplacer séquentiellement à travers chaque fente dans la direction verticale vers la paroi inférieure de la chambre à une vitesse de 1,0 mm/s sur une distance de 24 mm, une lame coupante de sonde ayant une partie de coupe inférieure 31 ayant une longueur de 60 mm et une hauteur de 5,7 mm entre un côté inférieur et un côté supérieur de celle-ci, sur ledit côté inférieur un bord tranchant aiguisé inférieur étant agencé ayant une longueur de 53 mm, encadré par des bords arrondis, le côté supérieur de la partie de coupe étant adjacent à un côté inférieur d'une partie de lame 3 dont la longueur renaît sur une hauteur de 34 mm jusqu'à un côté supérieur ayant une longueur de 46 mm et une épaisseur au niveau du côté supérieur de 2 mm, l'épaisseur de la partie de lame 3 renaissant du côté supérieur de celle-ci avec un angle de 1° entre le côté avant et arrière de celle-ci vers la partie de coupe, ladite partie de coupe renaissant du côté supérieur de celle-ci avec un angle de 6° entre le côté avant et arrière de celle-ci vers le bord tranchant aiguisé inférieur avec un tranchant calibré de 2,08 à 2,44 N,
iv. pendant ledit déplacement, mesurer la force de résistance exercée sur la lame dès que ladite force dépasse un seuil de 0,49 N, les étapes i à iv étant réalisée à 60°C,
v. répéter les étapes i. à iv., résultant en 6 mesures,
vi. calculer les paramètres Fmax (force de résistance moyenne maximale) et SA (aire moyenne, définie comme l'aire sous un graphe, reflétant la courbe de la force de résistance dans le temps lors de chaque mesure des étapes iv.) à partir des 6 mesures dans lesquelles les valeurs aberrantes en dehors de l'intervalle de confiance de 95% par analyse de variance (ANOVA) sont exclues du calcul,
résulte en un Fmax d'au moins 12 N au-dessus du seuil, et un SA d'au moins 130 Ns.

4. Procédé selon l'une quelconque revendications précédentes 41- 49, dans lequel dans l'étape c) :
- les bâtonnets de pommes de terre sont chauffés à 120°C ou moins, de préférence à environ 100°C et/ou
- les bâtonnets de pommes de terre sont chauffés à au moins 70°C, de préférence à au moins 80°C, plus préférablement à au moins 90°C, et/ou
- la durée de chauffage est de 180 secondes ou moins, de préférence 100 secondes ou moins, plus préférablement 80 secondes ou moins, encore plus préférablement 70 secondes ou moins, le plus préférablement d'environ 50 à 60 secondes, et/ou
- la durée de chauffage est d'au moins 30 secondes, plus préférablement d'au moins 50 secondes, et/ou
- les bâtonnets de pommes de terre de l'étape c) sont chauffés dans l'eau ou à la vapeur.

5. Procédé selon l'une quelconque des revendications précédentes, dans lequel dans l'étape d) :
- le refroidissement rapide est effectué pendant 10 minutes ou moins, de préférence pendant 8 minutes ou moins, plus préférablement pendant 6 minutes ou moins, et le plus préférablement pendant 5 minutes ou moins, et/ou
- les bâtonnets de pommes de terre chauffés sont refroidis rapidement à 15°C ou moins, de préférence 10°C ou moins, plus préférablement à 7°C ou moins, le plus préférablement à 3 à 5°C et/ou
- les bâtonnets de pommes de terre sont mis en contact avec un courant d'air forcé ayant une température entre 25°C et 1°C, et/ou
- les bâtonnets de pommes de terre sont mis en contact avec un liquide ayant une température entre 25°C et 1°C, de préférence de 15°C à 4°C, le liquide étant de préférence un liquide aqueux.

6. Procédé selon l'une quelconque des revendications précédentes, dans lequel les bâtonnets de pommes de terre ont une teneur en matière sèche entre 16 et 19% p/p pendant les étapes b), c) et d).

7. Procédé selon l'une quelconque des revendications précédentes, dans lequel la marinade liquide :
- est un milieu aqueux, et/ou
- a un pH entre 3,5 et 4,3, et/ou
- comprend un acide choisi dans le groupe, constitué de l'acide acétique, l'acide citrique, l'acide malique, l'acide lactique ou une combinaison de deux ou plusieurs de ceux-ci, la marinade comprenant de préférence l'acide acétique, en particulier du vinaigre, la marinade comprenant de préférence 0,5 à 5% v/v, plus préférablement 1 à 2% v/v de vinaigre.

8. Procédé selon l'une quelconque des revendications précédentes, dans lequel dans l'étape e) :
- la température élevée est inférieure à 100°C, et/ou
- la température élevée dans l'étape e) est entre 80 et 95°C, de préférence d'environ 90°C, et/ou
- l'incubation à la température élevée se fait pendant au moins 20 minutes, de préférence au moins 30 minutes, plus préférablement au moins 40 minutes, et/ou
- l'incubation à la température élevée se fait pendant au plus 120 minutes, de préférence au plus 90 minutes, plus préférablement au plus 60 minutes, et/ou
- comprend le remplissage d'un récipient avec les bâtonnets de pommes de terre refroidis rapidement de l'étape d) et la marinade et la fermeture du récipient avant d'incuber les bâtonnets de pommes de terre à température élevée.

9. Procédé selon l'une quelconque des revendications précédentes, dans lequel :
l'étape d) comprend l'ajout des bâtonnets de pommes de terre chauffés de l'étape c) à la marinade de l'étape e), ladite marinade ayant une température de 1 à 25°C, et
l'étape e) comprend le chauffage de la marinade liquide comprenant les bâtonnets de pommes de terre de l'étape d) à la température élevée d'au moins 65°C et une incubation à ladite température.

10. Procédé selon l'une quelconque des revendications précédentes, comprenant en outre une étape f) de stockage des bâtonnets de pommes de terre marinés de l'étape e) dans la marinade liquide dans un récipient fermé, l'étape f) étant de préférence :
- à température ambiante et/ou
- effectuée pendant au moins un mois, plus préférablement au moins 6 mois.

11. Procédé de détermination de l'aptitude d'un lot de pommes de terre pour une utilisation dans le procédé selon l'une quelconque des revendications précédentes, comprenant les étapes suivantes :
A) fournir des pommes de terre pelées,
B) couper les pommes de terre pelées en bâtonnets avec une surface transversale de 2,5 x 2,5 mm, dont au moins 90% ont une longueur de 30 à 150 mm,
C) blanchir lesdits bâtonnets de pommes de terre dans de l'eau bouillante pendant 3 minutes,
D) charger 160 g des bâtonnets de pommes de terre blanchis dans un récipient ayant une paroi supérieure et inférieure, une hauteur de 40 mm, une longueur de 100 mm et une largeur de 70 mm, dont la paroi supérieure à 3 fentes, chacune ayant une longueur de 65 mm et une largeur de 5 mm, les fentes ayant une distance de 2 cm entre elles et étant orientées parallèlement les unes par rapport aux autres, et perpendiculairement à l'axe de la chambre,
E) fermer la chambre,
F) déplacer séquentiellement à travers chaque fente en direction verticale vers la paroi inférieure de la chambre à une vitesse de 1,0 mm/s sur une distance de 24 mm, une lame coupante de sonde ayant une partie de coupe inférieure 31 ayant une longueur de 60 mm et une hauteur de 5,7 mm entre un côté inférieur et un côté supérieur de celle-ci, sur ledit côté inférieur un bord tranchant aiguisé inférieur étant agencé ayant une longueur de 53 mm, encadré par des bords arrondis, le côté supérieur de la section de coupe étant adjacent à un côté inférieur d'une partie de lame 3 dont la longueur renaît sur une hauteur de 34 mm jusqu'à un côté supérieur ayant une longueur de 46 mm et une épaisseur au niveau du côté supérieur de 2 mm, l'épaisseur de la partie de lame 3 renaissant du côté supérieur de celle-ci avec un angle de 1° entre le côté avant et arrière de celle-ci vers la partie de coupe, ladite partie de coupe renaissant du côté supérieur de celle-ci avec un angle de 6° entre le côté avant et arrière de celle-ci vers le bord tranchant aiguisé inférieur avec un tranchant calibré de 2,08 - 2,44 N, pendant ledit déplacement, mesurer la force de résistance exercée sur la lame dès que ladite force dépasse un seuil de 0,49 N, les étapes D) à F) étant réalisées à 60°C,
G) répéter les étapes D) à F), résultant en 6 mesures,
H) calculer les paramètres Fmax (force de résistance moyenne maximum) et SA (aire moyenne, définie comme l'aire sous un graphe, reflétant la courbe de force de résistance dans le temps lors de chaque mesure des étapes G) à partir des 6 mesures dans lesquelles les valeurs aberrantes en dehors de l'intervalle de confiance de 95% par analyse de variance (ANOVA) sont exclues du calcul,
I) déterminer que les pommes de terre sont adaptées si le Fmax est d'au moins 12 N au-dessus du seuil, et le SA est d'au moins 130 Ns.

12. Procédé selon la revendication 3 ou 11, dans lequel
- Fmax est d'au moins 13 N, de préférence d'au moins 14 N au-dessus du seuil, et le SA est d'au moins 140 Ns, et/ou
- le temps T_{FP} pour atteindre le premier pic sur la courbe temps-force est de 14 à 21, de préférence de 15 à 20 secondes, et/ou
- le temps T_{FM} pour atteindre Fmax est de 15 à 24 secondes.

13. Procédé selon l'une quelconque des revendications précédentes, dans lequel les pommes de terre de l'étape a) ou A) :
- ont une teneur en matière sèche, exprimée en gravité spécifique, entre 1,045 et 1,075 g/ml, plus préférablement entre 1,050 et 1,070 g/ml, et/ou
- ont une valeur de 1 à 4 sur l'échelle ferme/farineuse de 1 à 7, de préférence de 1 à 3, plus préférablement de 1 à 2 et le plus préférablement de 1, et/ou
- proviennent d'une variété, choisie dans le groupe, constitué d'Amandine (EU2504), Annabelle (EU6935), Franceline (EU175), Marilyn (EU17273), et des variétés dérivant de celles-ci.

14. Bâtonnets de pommes de terre, pouvant être obtenus par le procédé selon l'une quelconque des revendications 1 à 10.

15. Procédé de préparation de bâtonnets de pommes de terre sautés, comprenant les étapes de faire sauter les bâtonnets de pommes de terre marinés, tels qu'obtenus par le procédé selon l'une quelconque des revendications 1 à 10, dans lequel les bâtonnets de pommes de terre sont de préférence sautés dans l'huile, dans lequel la quantité d'huile, sur la base du poids, est de 1 à 20% de celui des bâtonnets de pommes de terre, de préférence de 2 à 5%.
